(19) Europäisches Patentamt / European Patent Office / Office européen des brevets

(11) **EP 4 478 436 A1**

(12) **EUROPEAN PATENT APPLICATION**

(43) Date of publication:
**18.12.2024 Bulletin 2024/51**

(21) Application number: **24175950.5**

(22) Date of filing: **15.05.2024**

(51) International Patent Classification (IPC):
*H01M 4/04* (2006.01)       *C01B 32/20* (2017.01)
*C01B 33/00* (2006.01)       *C09C 1/46* (2006.01)
*H01M 4/36* (2006.01)       *C01G 53/00* (2006.01)
*H01M 4/38* (2006.01)       *H01M 4/587* (2010.01)
*H01M 10/0525* (2010.01)       *H01M 4/02* (2006.01)

(52) Cooperative Patent Classification (CPC):
**H01M 4/366; C01B 32/205; C01G 53/50;**
**H01M 4/0471; H01M 4/386; H01M 4/587;**
**H01M 10/0525;** C01P 2002/72; C01P 2002/74;
C01P 2004/03; C01P 2004/45; C01P 2004/61;
C01P 2004/62; C01P 2004/64; C01P 2004/80;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.05.2023   KR 20230062573**
**29.08.2023   KR 20230113832**
**16.10.2023   KR 20230138050**
**20.11.2023   KR 20230160195**

(71) Applicant: **Lemon Energy Inc.**
**Incheon 22825 (KR)**

(72) Inventors:
• **Lee, Si Hyun**
  **22825 Incheon (KR)**
• **Lee, Jin Suk**
  **22825 Incheon (KR)**
• **Ahn, Yu Jeong**
  **22825 Incheon (KR)**

(74) Representative: **Grünecker Patent- und**
**Rechtsanwälte**
**PartG mbB**
**Leopoldstraße 4**
**80802 München (DE)**

(54) **SILICON CARBON COMPOSITE ANODE MATERIALS, PREPARATION METHOD THEREOF, AND SECONDARY BATTERY COMPRISING THE SAME**

(57)     Disclosed are a silicon carbon composite anode material, a method of preparing the same, and a secondary battery including the same. In one embodiment, the anode material includes: a hollow core having a hollow portion therein; nano-silicon particles packed in the hollow portion; and a first coating layer formed on an outer circumferential surface of the hollow core, wherein the first coating layer includes a hard coating layer, a medium coating layer or a soft coating layer, the hard coating layer has a higher hardness than the medium coating layer, the medium coating layer has a higher hardness than the soft coating layer, and the hollow core and the first coating layer have different hardnesses.

**FIG. 1**
**100**

**(Cont. next page)**

(52) Cooperative Patent Classification (CPC): (Cont.)
C01P 2006/12; C01P 2006/40; H01M 2004/021

**Description**

**Cross-Reference to Related Application**

This application claims the benefit of Korean Patent Application No. 10-2023-0062573, filed on May 15, 2023, No. 10-2023-0113832, filed on August 29, 2023, No. 10-2023-0138050 filed on October 16, 2023, and No. 10-2023-0160195 filed on November 20, 2023 in the Korean Intellectual Property Office, the entire disclosures of which are incorporated herein by reference.

**Field of the Invention**

The present invention relates to a silicon carbon composite anode material, a preparation method thereof, and a secondary battery including the same.

**Description of the Related Art**

Currently, generation of greenhouse gas including carbon dioxide and the like and global temperature rise due to the use of fossil energy are of serious concern. Regulation on emission of carbon dioxide is strengthened in countries around the world and introduction of electric vehicles using electricity as a power source is rapidly increasing to replace internal combustion vehicles driven by fossil fuels as a power source.

Secondary batteries are essential parts of electric vehicles to supply electricity thereto and can be repeatedly used through recharging, unlike primary batteries used once and discarded. In addition to electric vehicles, secondary batteries are used in various fields, such as notebook PCs, mobile devices, vertical take-off/landing aircraft used for Urban Air Mobility (UAM), and electric storage systems. In recent years, demand for high-capacity, low-weight and high-efficiency secondary batteries has increased with industrial development, and research and development of such secondary batteries have been actively conducted.

Representative secondary batteries include lead storage batteries, nickel-cadmium batteries, and lithium ion secondary batteries. Among these secondary batteries, the lithium secondary batteries generate electrical energy through intercalation and deintercalation of lithium ions (Li+) during charging/discharging, and have light weight and high energy density to be used in various fields, such as electric vehicles and the like.

The lithium secondary battery includes a cathode; an anode; an electrolyte disposed between the cathode and the anode; and a separator embedded in the electrolyte, in which each of the cathode and the anode includes active materials on a current collector. In the lithium secondary battery, a cathode material includes a lithium transition metal oxide and determines capacity and average voltage of the lithium ion battery as a lithium ion source, and an anode material stores and releases lithium ions emitted from the cathode to allow electric current to flow through an external circuit. The electrolyte acts as a medium for movement of lithium ions between the cathode and the anode inside the secondary battery.

In a typical lithium ion battery, crystalline carbon materials or amorphous carbon materials, such as natural graphite and artificial graphite, are used as the anode materials.

In recent years, silicon (Si) has attracted attention as an anode material instead of carbon. Since graphite used as the anode material in the art can store 1 lithium ion per 6 carbon atoms, whereas silicon (Si) can store 4.4 lithium ions per atom, silicon has advantages of a higher energy density than graphite, a theory capacity of about 4,200 mAh/g, and a very fast discharge rate.

However, a silicon anode material has a problem of low structural stability. In the lithium ion battery, the anode material undergoes anode volume expansion (lithiation) in the course of storing lithium ions. That is, graphite allows a volume expansion of about 10% to 20%, whereas silicon (Si) allows a large volume expansion of 4 to 5 times through reaction of 4.4 lithium ions per silicon to form $Li_{22}Si_5$ alloys. In particular, the silicon anode material has high crystal brittleness and thus can suffer from pulverization (particle cracking, fracture) and electrical separation from the current collector (Cu electrode plate) during repeated charging/discharging of the lithium ion battery, causing rapid capacity decay and decrease in lifespan of the lithium ion battery. Therefore, there is a need for preparation of an anode material to prevent fracture of the anode material due to such volume expansion of silicon.

In order to prevent fracture of the anode material due to such volume expansion of silicon, there is a need for size optimization of the anode material and for suitable control of the number of silicon particles contained in the anode material.

In addition, the silicon anode material has a problem of rapid deterioration in efficiency due to change in an interface state between the anode material (anode active material), the electrolyte, and the electrode. This is caused by generation of numerous lithium traps when silicon particles are broken due to expansion of the anode material during charging of the secondary battery. More specifically, since a solid electrolyte interphase (SEI) layer can be easily broken by mechanical stress during expansion of the silicon particles, a large amount of the SEI layer is formed on outer circumferential surfaces of the silicon particles when destruction and regeneration of the SEI layer is repeated during charging/discharging of the secondary battery, thereby causing a lithium trap phenomenon and deterioration in electrical contact between the silicon particles through increase in distance between the silicon particles. The SEI layer is a protective film formed on an outer circumferential surface of the active material upon reaction of the electrolyte with the active material of the electrode and has high lithium ion conductivity despite low electron mobility, thereby providing a passage through which lithium ions move between the electrolyte and the anode material. Since graphite allows a small volume change, there is no problem with the SEI layer. However, since silicon expands to the extent of destroying the SEI layer during charging of the secondary battery, lithium is consumed by lithiation of the silicon particles and a gas is generated. As a result, the SEI layer gradually hardens and becomes thicker, preventing lithium ions from having access to the electrode and causing reduction in battery life through restriction of oxidation-reduction reaction of lithium.

Therefore, studies are being actively conducted to prevent fracture of the anode material during charging/-discharging of the secondary battery through improvement in structural stability of the silicon anode material.

In addition, there is a need for size optimization of the anode material to prevent fracture of the anode material and reduction in capacity thereof due to expansion of silicon upon charging/discharging, and studies are being conducted to suitably control the number of silicon particles contained in the anode material.

Further, studies are being conducted to prevent fracture of the anode material and reduction in capacity thereof due to volume expansion of silicon upon charging/discharging.

The background technique of the present invention is disclosed in Korean Patent Registration No. 10-2185490 (Publication date: December 2, 2020, Title of Invention: Negative active material comprising silicon composite oxide for non-aqueous electrolyte secondary battery and manufacturing method of the same).

**Summary of the Invention**

It is one object of the present invention to provide a silicon carbon composite anode material that has good durability and structural stability.

It is another object of the present invention to provide a silicon carbon composite anode material that can prevent fracture of the anode material and deterioration in energy capacity thereof through minimization of volume expansion of silicon particles due to intercalation of lithium ions during charging/discharging of a battery.

It is a further object of the present invention to provide a silicon carbon composite anode material that can prevent fracture of the anode material due to volume expansion of silicon particles upon charging of a battery while securing good electrical characteristics through optimization of the number of silicon particles in the anode material.

It is yet another object of the present invention to provide a silicon carbon composite anode material that exhibits good properties in terms of electrical characteristics, high capacity, high output and long lifespan, reversibility, and initial efficiency.

It is yet another object of the present invention to provide a silicon carbon composite anode material that can be contained in high content in fabrication of an anode for secondary batteries.

It is yet another object of the present invention to provide a silicon carbon composite anode material that has good productivity and economic feasibility.

It is yet another object of the present invention to provide a method of preparing the silicon carbon composite anode material.

It is yet another object of the present invention to provide a secondary battery including the silicon carbon composite anode material.

One aspect of the present invention relates to a silicon carbon composite anode material.

1. The silicon carbon composite anode material includes: a hollow core having a hollow portion therein; nano-silicon particles packed in the hollow portion; and a first coating layer formed on an outer circumferential surface of the hollow core, wherein the first coating layer includes a hard coating layer, a medium coating layer or a soft coating layer, the hard coating layer has a higher hardness than the medium coating layer, the medium coating layer has a higher hardness than the soft coating layer, and the hollow core and the first coating layer have different hardnesses.

2. In embodiment 1, the anode material may further include nano-carbon particles dispersed between the nano-silicon particles.

3. In embodiments 1 to 2, the number of nano-silicon particles packed in the hollow portion may be set such that a total volume of expanded nano-silicon particles formed by intercalation of lithium ions into the nano-silicon particles is equal to or less than a volume of the hollow portion.

4. In embodiment 3, the number (n) of nano-silicon particles packed in the hollow portion may satisfy Formula 1.

[Formula 1]

$$n \leq \frac{0.7405\, q^3 + 0.484(1 - q^3)}{d^3},$$

where d denotes a relative diameter of the expanded nano-silicon particles, as calculated according to Formula 1-1 and q denotes a relative diameter of the expanded nano-silicon particles at the center of the hollow portion, as calculated according to Formula 1-2.

[Formula 1-1]

d = r'/R,

where R denotes the radius of the hollow portion and r' denotes the radius of the expanded nano-silicon particles, r' = 1.5874*r (r being the radius of the nano-silicon particles).

[Formula 1-2]

q= 1-2*d,

where d is the same as defined above.

5. In embodiment 3, the anode material may include first nano-silicon particles and second nano-silicon particles having a radius ri and a radius rz, respectively, and the number ($n_1$) of the first nano-silicon particles packed in the hollow portion and the number (nz) of the second nano-silicon particles packed therein may satisfy Formula 2.

[Formula 2]

$$n_1 \left(\frac{r_1'}{R}\right)^3 + n_2 \left(\frac{r_2'}{R}\right)^3 \leq 1,$$

where $r_1'$ denotes a radius of first expanded nano-silicon particles, $r_2'$ denotes a radius of second expanded nano-silicon particles, and R is a radius of the hollow portion, $r_1'$ and $r_2'$ being $1.5874*r_1$ and $1.5874*r_2$, respectively.

6. In embodiments 1 to 5, the anode material may have an average particle diameter of 5 $\mu$m to 30 $\mu$m and the nano-silicon particles may have an average particle diameter of 50 nm to 500 nm.

7. In embodiments 1 to 6, the hollow portion may have an average diameter of 3 $\mu$m to 10 $\mu$m, the nano-silicon particles may have an average particle diameter of 100 nm to 500 nm, and the number of nano-silicon particles packed in the hollow portion may range from 1,100 to 15,000.

8. In embodiments 1 to 7, the anode material may have a particle density of 1 g/cm$^3$ to 3 g/cm$^3$, the hollow core may have a thickness of 5 nm to 300 nm and a density of less than 1.8 g/cm$^3$, and the first coating layer may have a thickness of 5 nm to 100 nm and a density of 1.8 g/cm$^3$ to 2.5 g/cm$^3$.

9. In embodiments 1 to 8, the hard coating layer may have a pencil hardness of 4H or higher as measured in accordance with ISO 15184, and a density of greater than 1.8 g/cm$^3$, the medium coating layer may have the pencil hardness of 2H to less than 4H and a density of greater than 1.5 g/cm$^3$ to 1.8 g/cm$^3$, and the soft coating layer may have the pencil hardness of less than 2H and a density of 1.5 g/cm$^3$ or less.

10. In embodiments 1 to 9, the anode material may further include a second coating layer formed on an outer circumferential surface of the first coating layer, wherein the second coating layer has a different hardness than the first coating layer and includes at least one of a hard coating layer, a medium coating layer and a soft coating layer.

11. In embodiments 1 to 10, the anode material may have a nano-silicon particles packing density of 75% or less.

12. In embodiments 1 to 11, the anode material may include 25 wt% to 80 wt% of the nano-silicon particles, 1 wt% to 40 wt% of the hollow core, and 1 wt% to 40 wt% of the first coating layer.

13. In embodiments 1 to 12, the anode material may include the first coating layer and the hollow core in a weight ratio of 1:0.5 to 1:5.

14. In embodiments 1 to 13, the anode material may include the first coating layer, second coating layer and the hollow core in a weight ratio of 1:0.1 to 5:0.5 to 5.

Another aspect of the present invention relates to a method of preparing the silicon carbon composite anode material.

15. The method may include: drying a nano-silicon slurry to prepare dried powder; preparing a first intermediate material using the dried powder and a first coating material; and preparing a second intermediate material using the first intermediate material and a second coating material, wherein the second intermediate material includes a hollow core having a hollow portion therein, nano-silicon particles packed in the hollow portion, and a first coating layer formed on an outer circumferential surface of the hollow core; and wherein the first coating layer includes a hard coating layer, a medium coating layer or a soft coating layer, the hard coating layer has a higher hardness than the medium coating layer, the medium coating layer has a higher hardness than the soft coating layer, and the hollow core and the first coating layer have different hardnesses.

16. In embodiment 15, the method may further include forming a second coating layer on an outer circumferential surface of the first coating layer of the second intermediate material after preparation of the second intermediate material, wherein the second coating layer has a different hardness than the first coating layer and includes a hard coating layer, a medium coating layer or a soft coating layer.

17. In embodiments 15 to 16, the nano-silicon slurry may be prepared by dispersing silicon powder and a dispersant in a first solvent to prepare a dispersion, followed by grinding the dispersion, and the first solvent may include at least one of water, ethanol, isopropyl alcohol, and potassium hydroxide (KOH).

A further aspect of the present invention relates to a secondary battery including the silicon carbon composite anode material.

18. The secondary battery may include a cathode; an anode; and an electrolyte disposed between the cathode and the anode, wherein the anode includes the anode material.

The anode material according to the present invention has good durability and structural stability, can minimize fracture of the anode material and reduction in energy capacity through minimization of volume expansion of silicon particles due to intercalation of lithium ions during charging/discharging, can prevent fracture of the anode material due to volume expansion of silicon particles during charging/discharging while securing good electrical characteristics through optimization of the size and the number of silicon particles in the anode material, can be contained in high content in fabrication of an anode for secondary batteries, and has good properties in terms of high capacity, high energy density, high output and long lifespan while securing good reversibility, initial efficiency, productivity, and economic feasibility.

**Brief Description of the Drawings**

FIG. 1 is a view of an anode material according to one embodiment of the present invention.
FIG. 2 is a view of an anode material according to another embodiment of the present invention.
FIG. 3 is an XRD graph of an anode material of Example 1.

**Detailed Description of the Invention**

Hereinafter, embodiments of the present invention will be described in detail with reference to the accompanying drawings.
In the drawings, portions irrelevant to the description will be omitted for clarity and like components will be denoted by like reference numerals throughout the specification. Although lengths, thicknesses or widths of various components may be exaggerated for understanding in the drawings, the present invention is not limited thereto.
In addition, the terms as used herein are defined by taking functions of the invention into account and can be changed according to the custom or intention of users or operators. Therefore, definition of the terms should be made according to the overall disclosure set forth herein.

**Silicon carbon composite anode material**

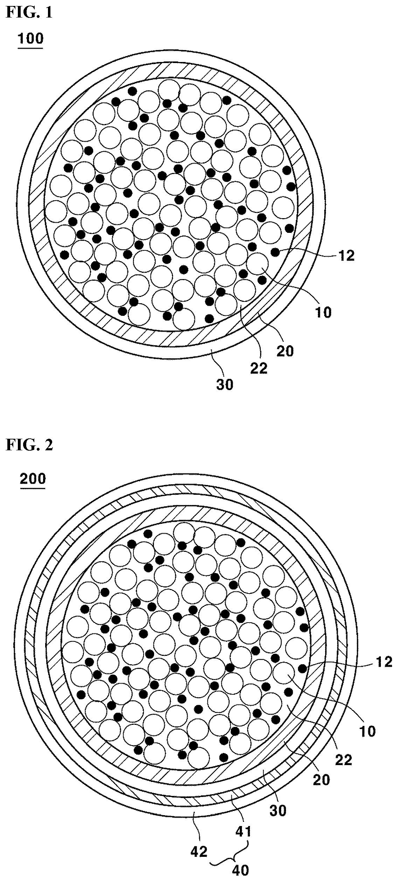

One aspect of the present invention relates to a silicon carbon composite anode material. FIG. 1 is a view of an anode material according to one embodiment of the present invention. Referring to FIG. 1, a silicon carbon composite anode material 100 includes a hollow core 20 having a hollow portion 22 therein; nano-silicon particles 10 packed in the hollow portion 22; and a first coating layer 30 formed on an outer circumferential surface of the hollow core 20.
In one embodiment, the first coating layer 30 includes a hard coating layer, a medium coating layer, or a soft coating layer. The hard coating layer has a higher hardness than the medium coating layer and the medium coating layer has a higher hardness than the soft coating layer.
The hollow core has a different hardness than the first coating layer. Under these conditions, the anode material can relieve expansion of the hollow core and the first coating layer due to expansion of the nano-silicon particles, thereby securing long lifespan by preventing fracture and cracking of the anode material in charging/discharging of a secondary battery.

In one embodiment, the anode material may include 25 wt% to 80 wt% of the nano-silicon particles, 1 wt% to 40 wt% of the hollow core, and 1 wt% to 40 wt% of the first coating layer.

In one embodiment, the anode material may have a particle density of 1 g/cm$^3$ to 3 g/cm$^3$. Under this condition, the anode material can exhibit good output characteristics and is lightweight.

In one embodiment, the anode material may have an average particle diameter of 3 $\mu$m to 30 $\mu$m. Under these conditions, the anode material can secure high capacity, high output and structural stability to prevent fracture of the anode material due to expansion of the nano-silicon particles in charging/discharging while securing long lifespan. For example, the anode material may have an average particle diameter of 3 $\mu$m to 30 $\mu$m, 3.1 $\mu$m to 20 $\mu$m, 3.5 $\mu$m to 15 $\mu$m, 4 $\mu$m to 15 $\mu$m, or 6 $\mu$m to 10 $\mu$m. For example, the anode material may have an average particle diameter of 3, 4, 5, 6, 7, 8, 9, 10, 11, 12, 13, 14, 15, 16, 17, 18, 19, 20, 21, 22, 23, 24, 25, 26, 27, 28, 29, or 30 $\mu$m.

**Hollow core**

Referring to FIG. 1, the hollow core 20 may have the hollow portion 22 therein and may include the nano-silicon particles 10 packed in the hollow portion 22. The hollow core 20 may have a spherical shape or an elliptical shape. For example, the hollow core 20 may have a spherical shape.

For example, the hollow core may have a different density, specific surface area and resistivity than the first coating layer.

In one embodiment, the hollow core may have a density of 1.8 g/cm$^3$ to 2.5 g/cm$^3$. Under this condition, the anode material can exhibit good structural stability and is lightweight. For example, the hollow core may have a density of 1.8 g/cm$^3$ to 2.1 g/cm$^3$.

In another embodiment, the hollow core may have a density of less than 1.8 g/cm$^3$. Under this condition, the anode material can have good structural stability and is lightweight. For example, the hollow core may have a density of 0.3 g/cm$^3$ to 1.7 g/cm$^3$.

In one embodiment, the hollow core may have a specific surface area (BET) of 100 m$^2$/g or less. Under this condition, the anode material can have good structural stability.

In another embodiment, the hollow core may have a specific surface area (BET) of greater than 100 m$^2$/g. Under this condition, the anode material can have good structural stability. For example, the hollow core may have a specific surface area (BET) of 110 m$^2$/g to 500 m$^2$/g.

In one embodiment, the hollow core may have a purity (impurity content) of 100 ppm or less. Under this condition, the anode material can exhibit good electrical conductivity.

In another embodiment, the hollow core may have a purity (impurity content) of 500 ppm or more. Under this condition, the anode material can exhibit good electrical conductivity. For example, the hollow core may have an impurity content of 500 ppm to 3,000 ppm.

In one embodiment, the hollow core may have a resistivity of 3 $\mu\Omega\cdot$m to 5 $\mu\Omega\cdot$m. Under this condition, the anode material can exhibit good electrical conductivity.

In another embodiment, the hollow core may have a resistivity of 20 $\mu\Omega\cdot$m or more. Under this condition, the anode material can exhibit good electrical conductivity. For example, the hollow core may have a resistivity of 20 $\mu\Omega\cdot$m to 80 $\mu\Omega\cdot$m.

In one embodiment, the hollow core may have a pencil hardness of 4H or higher, as measured in accordance with ISO 15184. Under this condition, the hollow core has good durability and strength and it is possible to effectively prevent damage to or fracture of the hollow core (or the anode material) upon expansion of the nano-silicon particles due to intercalation of lithium ions thereinto. For example, the hollow core may have a pencil hardness of 4H to 6H.

In another embodiment, the hollow core may have a pencil hardness of less than 4H, as measured in accordance with ISO 15184. Under this condition, the hollow core has good flexibility and it is possible to effectively prevent damage to or fracture of the hollow core (or the anode material) upon expansion of the nano-silicon particles due to intercalation of lithium ions thereinto. For example, the hollow core may have a pencil hardness of B to 3H. In another embodiment, the hollow core may have a pencil hardness of 2H to 3H.

In one embodiment, the hollow core may be present in an amount of 1 wt% to 40 wt% based on the total amount of the anode material. Within this range, the anode material can exhibit good properties in terms of durability, structural stability, and electrical properties. For example, the hollow core may be present in an amount of 1 wt% to 30 wt%, 1 wt% to 25 wt%, 2 wt% to 20 wt% or 2 wt% to 15 wt%. For example, the hollow core the hollow core may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

**Nano-silicon particles**

The nano-silicon particles serve to secure high capacity and high output. In one embodiment, the nano-silicon particles may have a spherical, polyhedral, elliptical or amorphous shape. For example, the nano-silicon particles may have a spherical shape.

Conventionally, in order to prevent fracture of the anode material upon expansion of silicon due to intercalation of lithium ions thereinto, the anode material is prepared by adding flake graphite to silicon, followed by grinding and sintering. However, in preparation of the anode material, oxidation of silicon occurs upon grinding silicon and the flake graphite, thereby causing significant reduction in capacity to less than 1,300 mAh/g.

Conversely, the anode material according to the present invention employs the hollow core and the first coating layer, and does not include flake graphite to prevent fracture of the anode material due to expansion of the nano-silicon particles, thereby securing long lifespan while realizing a high capacity of 2,000 mAh/g or more.

In one embodiment, the number of nano-silicon particles packed in the hollow portion may be set such that the total volume of expanded nano-silicon particles formed by intercalation of lithium ions into the nano-silicon particles is equal to or less than the volume of the hollow portion. Under this condition of the number of nano-silicon particles, the hollow core (or the anode material) does not suffer from cracking or fracture upon expansion of the nano-silicon particles.

In one embodiment, the nano-silicon particles may exhibit relatively high crystallinity.

In one embodiment, the nano-silicon particles may have an effective peak at a diffraction angle ($2\theta$) of $26°$ to $30°$, $47°$ to $50°$, $53°$ to $58°$, $68°$ to $72°$, $74°$ to $78°$, and/or $88°$ to $90°$ in the X-ray diffraction (XRD) spectrum. Under this condition, the anode material can secure good properties in terms of high capacity and high output and can effectively prevent fracture of the nano-silicon particles upon charging/discharging.

For example, the nano-silicon particles may have an effective peak at a diffraction angle ($2\theta$) of $27.5°$ to $28.5°$, $47.5°$ to $48.5°$, $56°$ to $57°$, $68°$ to $69.5°$, $75°$ to $76°$, and $88°$ to $90°$ in the X-ray diffraction spectrum, in which the effective peak may represent the (111), (220), (311), (400), (331) and (442) planes. Under this condition, the anode material can secure good properties in terms of high capacity and high output and can effectively prevent fracture of the silicon particles upon charging/discharging.

For example, the nano-silicon particles may have effective peaks at a diffraction angle ($2\theta$) of $26°$ to $30°$ at the (111) plane and at a diffraction angle ($2\theta$) of $47°$ to $50°$ at the (220) plane in the X-ray diffraction spectrum using CuK$\alpha$-ray of 1.54 Å to 2.0 Å.

For example, the nano-silicon particles may have effective peaks at a diffraction angle ($2\theta$) of $26°$ to $30°$ at the (111) plane and at a diffraction angle ($2\theta$) of $47°$ to $50°$ at the (220) plane in the X-ray diffraction spectrum using CuK$\alpha$-ray of 1.54178 Å under conditions: $0.01°$ step size and $2\theta$ of $10°$ to $70°$.

In one embodiment, the nano-silicon particles may have an FWHM (full width at half maximum) value of the X-ray diffraction angle ($2\theta$) of $0.40°$ to $0.80°$, preferably $0.52°$ to $0.68°$, or $0.59°$ to $0.71°$, at the (111) and (220) planes in X-ray diffraction analysis using CuK$\alpha$-rays of 1.54Å to 2.0Å. Under this condition, the anode material can secure high capacity and high output of the nano-silicon particles and can significantly suppress fracture of the silicon particles upon charging/discharging.

In one embodiment, the nano-silicon particles may have an average particle diameter of 50 nm to 500 nm. In another embodiment, the nano-silicon particles may have an average particle diameter (d50) of 500 nm or less, more preferably 160 nm to 260 nm, 180 nm to 230 nm, 190 nm to 220 nm, or 200 nm to 220 nm. In addition, controlling the maximum average particle diameter (Dmax) of the nano-silicon particles is also important. For example, the nano-silicon particles may have a maximum average particle diameter (Dmax) of 380 nm or less, preferably 320 nm to 360 nm, more preferably 300 nm to 340 nm. A lower Dmax value indicates a higher viscosity of the nano-silicon slurry, and the viscosity of the nano-silicon slurry may be controlled to 6,500 cP or less (at 25°C).

In one embodiment, the hollow portion may be packed with the nano-silicon particles in a hexagonal close packed (HCP) or face-centered cubic (FCC) structure. With this structure, it is possible to calculate the maximum number of the expanded nano-silicon particles that can be packed in the hollow portion.

The number of nano-silicon particles packed in the hollow portion may be set in consideration of the maximum expandable volume upon intercalation of lithium ions. For example, when the nano-silicon particles are expanded 4 times in volume, the number of nano-silicon particles packed in the hollow portion may be calculated based on an assumption that the hollow portion may be packed with the nano-silicon particles in the hexagonal close packed (HCP) or face-centered cubic (FCC) structure.

For example, upon expansion of the spherical nano-silicon particles having a radius r to 4 times in volume, the expanded nano-silicon particles may have a radius r' equal to 1.5874*r. The radius r' of the expanded nano-silicon particles may be deduced from the formula: $(4/3)*\pi*(r')^3 = 4*(4/3)*\pi*(r)^3$ ($r' = (^3\sqrt{4})*r \approx 1.5874*r$).

In addition, the number of nano-silicon particles packed in the hollow portion may be deduced in consideration of the particle-packing rate ($\pi*(\sqrt{3}/2) \approx 0.7405$) in the hexagonal close packed (HCP) or face-centered cubic (FCC) structure.

In one embodiment, when the nano-silicon particles having a radius (r) of 100 nm are expanded 4 times in volume, the expanded nano-silicon particles may have a radius (r') of about 158 nm (158.74 nm). In another embodiment, when the nano-silicon particles having a radius (r) of 150 nm are expanded 4 times in volume, the expanded nano-silicon particles may have a radius (r') of about 238 nm (238.11 nm).

In one embodiment, the maximum number (n) of nano-silicon particles having a radius r and capable of being packed in the hollow portion having a radius R may satisfy Formula 1.

[Formula 1]

$$n \leq \frac{0.7405\, q^3 + 0.484(1 - q^3)}{d^3}$$ ,

where d denotes a relative diameter of the expanded nano-silicon particles, as calculated according to Formula 1-1, and q denotes a relative diameter of the expanded nano-silicon particles at the center of the hollow portion, as calculated according to Formula 1-2.

[Formula 1-1]

d = r'/R,

where R denotes the radius of the hollow portion and r' denotes the radius of the expanded nano-silicon particles, r' = 1.5874*r (r being the radius of the nano-silicon particles))

[Formula 1-2]

q= 1-2*d

where d is the same as defined above.

In Formula 1, the maximum number (n) of nano-silicon particles capable of being packed in the hollow portion may be deduced from $(1/d^3) * (0.7405*q^3 + 0.484*(1-q^3))$.

When the number of nano-silicon particles packed in the hollow portion is set under the condition of Formula 1, the hollow core (or the anode material) does not suffer from cracking or fracture due to expansion of the nano-silicon particles.

In one embodiment, the hollow portion may have an average diameter of 3 $\mu$m to 10 $\mu$m and the nano-silicon particles may have an average particle diameter of 50 nm to 500 nm. Under the conditions of the average diameter of the hollow portion and the average particle diameter of the nano-silicon particles, the anode material allows easy control of the number of nano-silicon particles and can prevent fracture of the hollow core due to expansion of the nano-silicon particles while securing high capacity and high output of the anode material.

For example, the hollow portion may have a radius of 1.5 $\mu$m to 5 $\mu$m (average diameter: 3 $\mu$m to 10 $\mu$m) and the nano-silicon particles may have an average particle diameter (d50) of 100 nm to 500 nm (radius: 50 nm to 250 nm).

In one embodiment, the number of nano-silicon particles packed in the hollow portion may range from 1,100 to 15,000. Under this condition, the anode material allows easy control of the number of nano-silicon particles and can prevent fracture of the hollow core due to expansion of the nano-silicon particles while securing high capacity and high output of the anode material.

In one embodiment, the anode material may include one or more types of nano-silicon particles having different average particle diameters.

In one embodiment, the anode material may include first and second nano-silicon particles having a radius ri and a radius rz, respectively. The radius ri may be the same as or different from the radius rz.

In one embodiment, the anode material may include the first and second nano-silicon particles having the radius ri and the radius rz, respectively, and the numbers ($n_1$, $n_2$) of first and second nano-silicon particles packed in the hollow portion having a radius R may satisfy Formula 2.

[Formula 2]

$$n_1 \left(\frac{r_1'}{R}\right)^3 + n_2 \left(\frac{r_2'}{R}\right)^3 \leq 1 \quad,$$

where $r_1'$ denotes the radius of the first expanded nano-silicon particles, $r_2'$ denotes the radius of the second expanded nano-silicon particles, and R is the radius of the hollow portion, $r_1'$ and $r_2'$ being $1.5874 \cdot r_1$ and $1.5874 \cdot r_2$, respectively.

When the number of nano-silicon particles packed in the hollow portion is set under the conditions of Formula 2, the anode material can prevent cracking or fracture of the hollow core (or the anode material) due to expansion of the nano-silicon particles.

In one embodiment, when the first and second nano-silicon particles having the radius ri and the radius $r_2$ are expanded 4 times in volume, the first expanded nano-silicon particles and the second expanded nano-silicon particles may have a radius $r_1'$ and $r_2'$, which correspond to $1.5874 \cdot r_1$ and $1.5874 \cdot r_2$, respectively.

Accordingly, the total volume of the first and second expanded nano-silicon particles is equal to or less than the volume of the hollow portion ($n_1 \cdot 4 \cdot (4/3) \cdot \pi \cdot (r_1')^3 + n_2 \cdot 4 \cdot (4/3) \cdot \pi \cdot (r_2')^3 \leq 4 \cdot (4/3) \cdot \pi \cdot (R)^3$) and the conditions for Formula 2 may be deduced therefrom.

In one embodiment, the hollow portion may have an average diameter of 6 $\mu$m to 10 $\mu$m (radius: 3 $\mu$m to 5 $\mu$m) and the first and second nano-silicon particles may have an average particle diameter (d50) of 100 nm to 500 nm (radius: 50 nm to 250 nm). Under this condition, the anode material can secure good dispersion of the nano-silicon particles, can prevent fracture of the hollow core due to expansion of the nano-silicon particles, and can exhibit good properties in terms of high capacity and high output.

In one embodiment, the number of nano-silicon particles packed in the hollow portion may range from 1,100 to 15,000. Under this condition, the anode material allows easy control of the number of nano-silicon particles, can prevent fracture of the hollow core due to expansion of the nano-silicon particles, and can exhibit good properties in terms of high capacity and high output.

In one embodiment, the hollow portion may have an average diameter of 6 $\mu$m to 10 $\mu$m (radius: 3 $\mu$m to 5 $\mu$m), the number of first nano-silicon particles having an average particle diameter (d50) of 180 nm to 220 nm (radius: 90 nm to 110 nm) may range from 950 to 5,000, and the number of first nano-silicon particles having an average particle diameter (d50) of 280 nm to 320 nm (radius: 140 nm to 160 nm) may range from 150 to 3,000. Under these conditions, the anode material can secure good dispersion of the nano-silicon particles, can prevent fracture and cracking of the hollow core due to expansion of the nano-silicon particles, and can exhibit good properties in terms of high capacity and high output.

In one embodiment, the hollow portion may have a nano-silicon particle-packing density of 75% or less. The nano-silicon particle-packing density may mean the number of nano-silicon particles actually packed in the hollow portion relative to the maximum number of nano-silicon particles capable of being packed in the hollow portion. For example, the packing density may be represented by Formula 3.

[Formula 3]

$$\text{Packing density} = (n_1/n_0) \cdot 100,$$

where $n_0$ denotes the maximum number of nano-silicon particles capable of being packed in the hollow portion, as calculated by Formula 1-3 and $n_1$ denotes the number of nano-silicon particles packed in the hollow portion, as calculated by Formula 1.

$n_1$ may be deduced in the same manner as in Formula 1 or Formula 2.

$n_0$ may be deduced according to Formula 1-3.

[Formula 1-3]

$$n_0 = \frac{0.7405\, q_0^3 + 0.484(1 - q_0^3)}{d_0^3} \quad,$$

where $d_0$ denotes a relative diameter of the nano-silicon particles, as calculated according to Formula 1-4, and $q_0$ denotes a relative diameter of the nano-silicon particles at the center of the hollow portion, as calculated according to Formula 1-5.

$$[\text{Formula 1-4}]$$

$$d_0 = r/R,$$

where R is the radius of the hollow portion and r is the radius of the nano-silicon particles.

$$[\text{Formula 1-5}]$$

$$q_0 = 1-2*d_0,$$

where $d_0$ is the same as defined above.

With the above condition of packing density, the anode material can secure good properties in terms of high capacity and high output without fracture of the anode material due to expansion of the nano-silicon particles. For example, the hollow portion may have a nano-silicon particle-packing density of 20% to 50%. In another example, the hollow portion may have a nano-silicon particle-packing density of 20% to 25%.

In one embodiment, the nano-silicon particles may be present in an amount of 25 wt% to 80 wt% based on the total weight of the anode material. Within this range, the anode material can have good properties in terms of miscibility, durability, high capacity, and high output. For example, the nano-silicon particles may be present in an amount of 25 wt% to 70 wt%. In another embodiment, the nano-silicon particles may be present in an amount of 25 wt% to 65 wt%, 25 wt% to 60 wt%, or 30 wt% to 50 wt%. For example, the nano-silicon particles may be present in an amount of 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 wt%.

**Nano-carbon particles**

Referring to FIG. 1, the anode material 100 may further include nano-carbon particles 12 dispersed between the nano-silicon particles 10 packed in the hollow portion 22.

The nano-carbon particles may have a spherical, polyhedral or elliptical shape. For example, the nano-carbon particles may have a spherical shape.

In one embodiment, the nano-carbon particles may be dispersed between the nano-silicon particles in the course of sintering using a hard coating material or a soft coating material described below. With the nano-carbon particles, the anode material can exhibit good properties in terms of electrical conductivity, high output and long lifespan, and can prevent reduction in capacity.

In one embodiment, the nano-carbon particles may be dispersed between the nano-silicon particles to form spaces in the hollow portion and can absorb expansion of the nano-silicon particles.

In one embodiment, the packing ratio may be determined through adjustment in weights of the nano-silicon particles and the nano-carbon particles, volume ratio and particle size distribution.

In one embodiment, the nano-carbon particles may have an average particle diameter (d50) of 3 nm to 500 nm. Within this range, the anode material can exhibit good electrical conductivity and long lifespan while preventing reduction in capacity. For example, the nano-carbon particles may have an average particle diameter (d50) of 5 nm to 300 nm, 5 nm to 100 nm, 5 nm to 50 nm, or 5 nm to 30 nm.

In one embodiment, the nano-carbon particles may have a density of 2.5 g/cm$^3$ or less. Within this range, the anode material can exhibit good electrical conductivity and is lightweight. For example, the nano-carbon particles may have a density of 0.3 to 2.5 g/cm$^3$.

For example, the nano-carbon particles may include first nano-carbon particles having a pencil hardness of 4H to 6H, as measured in accordance with ISO 15184, a resistivity of 3 $\mu\Omega\cdot$m to 5 $\mu\Omega\cdot$m and a density of 1.8 g/cm$^3$ to 2.5 g/cm$^3$.

In another example, the nano-carbon particles may include first nano-carbon particles having a pencil hardness of B to 3H, as measured in accordance with ISO 15184, a resistivity of 50 $\mu\Omega\cdot$m to 300 $\mu\Omega\cdot$m, and a density of 0.3 g/cm$^2$ to 1.5 g/cm$^2$.

In one embodiment, the nano-carbon particles may have a purity (impurity content) of 100 ppm or less. Under this condition, the anode material can exhibit good electrical conductivity.

In another embodiment, the nano-carbon particles may have a purity (impurity content) of 300 ppm or more, for example, 300 ppm to 800 ppm.

In one embodiment, the nano-carbon particles may be present in an amount of 0.1 wt% to 20 wt% based on the total weight of the anode material. Within this range, the anode material can have good properties in terms of miscibility, durability, high capacity, and high output. For example, the nano-carbon particles may be present in an amount of 0.5 wt% to 15 wt%. In another example, the nano-carbon particles may be present in an amount of 0.5 wt% to 10 wt%, 0.5 wt% to 8 wt%, 1 wt% to 6 wt%, 1 wt% to 5 wt%, or 1 wt% to 3 wt%. For example, the nano-carbon particles may be present in an amount of 0.1, 0.5, 1, 2, 3, 4, 5, 6, 7, 8, 9, 10, 11, 12, 13, 14, 15, 16, 17, 18, 19 or 20 wt%.

**First coating layer**

The first coating layer includes a hard coating layer, a soft coating layer or a medium coating layer, in which the hollow core has a different hardness than the first coating layer.

In one embodiment, the first coating layer has a different hardness than the hollow core. With this hardness gradient, the anode material can have good strength and durability and can prevent cracking or fracture of the hollow core and the first coating layer due to expansion of the nano-silicon particles (or the nano-silicon particles) by intercalation of lithium ions.

For example, the first coating layer may have a higher hardness than the hollow core. In another example, the hollow core may have a higher hardness than the first coating layer.

In one embodiment, the first coating layer may be present in an amount of 1 wt% to 40 wt% based on the total weight of the anode material. Within this range, the anode material can have good properties in terms of durability, structural stability, and electrical properties. For example, the first coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 2 wt% to 10 wt%, or 2 wt% to 5 wt%. For example, the first coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

Next, the hard coating layer, the soft coating layer and the medium coating layer included in the first coating layer will be described.

(1) Hard coating layer: The hard coating layer may be formed by sintering a hard coating material described below. With the hard coating layer, the anode material can have good strength and durability to prevent fracture of the anode material upon expansion of the nano-silicon particles, can exhibit good electrical conductivity and long lifespan, and can prevent reduction in capacity.

The hard coating layer may exhibit relatively high crystallinity. Under this condition, the anode material can have good durability and strength.

In one embodiment, the hard coating layer may have higher crystallinity than the medium coating layer and the soft coating layer described below. In addition, the medium coating layer may have higher crystallinity than the soft coating layer. Here, crystallinity can be confirmed through typical XRD (X-ray diffraction) analysis. Under this condition, the anode material can prevent fracture and cracking of the anode material due to expansion of the nano-silicon particles to secure long lifespan, and can exhibit good properties in terms of electrical conductivity, strength and high output.

In one embodiment, the hard coating layer may have a thickness of 5 nm to 100 nm. Under this condition, the hard coating layer can have good hardness and mechanical strength to prevent damage to or fracture of the anode material upon expansion of the nano-silicon particles. For example, the hard coating layer may have a thickness of 5 nm to 60 nm, 5 nm to 30 nm, or 5 nm to 20 nm.

In one embodiment, the hard coating layer may have a density of greater than 1.8 g/cm$^3$. Under this condition, the hard coating layer can have good structural stability and is lightweight. For example, the hard coating layer may have a density of 1.85 g/cm$^3$ to 2.8 g/cm$^3$ or 1.85 g/cm$^3$ to 2.65 g/cm$^3$.

In one embodiment, the hard coating layer may have a specific surface area (BET) of 100 m$^2$/g or less. Under this condition, the anode material can have good structural stability.

In one embodiment, the hard coating layer may have a purity (impurity content) of 100 ppm or less. Under this condition, the anode material can exhibit good electrical conductivity.

In one embodiment, the hard coating layer may have a resistivity of 3 $\mu\Omega$·m to 5 $\mu\Omega$·m. Under this condition, the anode material can exhibit good electrical conductivity.

In one embodiment, the hard coating layer may have a pencil hardness of 4H or higher, as measured in accordance with ISO 15184. Under this condition, the hard coating layer can exhibit good durability and strength, and can prevent damage to or fracture of the hollow core (or the anode material) upon expansion of the nano-silicon particles due to intercalation of lithium ions thereinto. For example, the hard coating layer may have a pencil hardness of greater than 4H, or 4.5H to 7H.

In one embodiment, the hard coating layer may be present in an amount of 1 wt% to 40 wt% based on the total weight of the anode material. Within this range, the anode material can exhibit good properties in terms of durability, structural stability, and electrical properties. For example, the hard coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 2 wt% to 10 wt%, or 2 wt% to 5 wt%.

For example, the first coating layer includes the hard coating layer in an amount of 1, 2, 3, 4, 5, 6, 7, 8, 9, 10, 11, 12,

**EP 4 478 436 A1**

13, 14, 15, 16, 17, 18, 19, 20, 21, 22, 23, 24, 25, 26, 27, 28, 29, 30, 31, 32, 33, 34, 35, 36, 37, 38, 39 or 40 wt%.

(2) Medium coating layer: In one embodiment, the medium coating layer may be formed by heat treatment of at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

In one embodiment, the medium coating layer may be a non-crystalline or crystalline layer. Under this condition, the anode material can exhibit high strength and durability.

In one embodiment, the medium coating layer may have a thickness of 5 nm to 100 nm. Under this condition, the medium coating layer can have good properties in terms of hardness, flexibility and mechanical strength, and can prevent damage to or fracture of the anode material upon expansion of the nano-silicon particles. For example, the medium coating layer may have a thickness of 5 nm to 60 nm, 5 nm to 30 nm, or 5 nm to 20 nm.

In one embodiment, the medium coating layer may have a pencil hardness of 2H to less than 4H, as measured in accordance with ISO 15184. Under this condition, the medium coating layer can prevent damage to or fracture of the anode material upon expansion of the nano-silicon particles to secure long lifespan. For example, the medium coating layer may have a pencil hardness of 2H to 3.5H.

In one embodiment, the medium coating layer may have a density of greater than 1.5 $g/cm^3$ to 1.8 $g/cm^3$ or less. Under this condition, the medium coating layer can exhibit good structural stability and is lightweight. For example, the medium coating layer may have a density of greater than 1.5 $g/cm^3$ to 1.7 $g/cm^3$ or less.

In one embodiment, the medium coating layer may have a specific surface area (BET) of 100 $m^2/g$ to 200 $m^2/g$. Under this condition, the medium coating layer can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 $\mu\Omega\cdot$m to 40 $\mu\Omega\cdot$m. Under this condition, the anode material can exhibit good electrical conductivity.

In one embodiment, the medium coating layer may be present in an amount of 1 wt% to 40 wt% based on the total weight of the anode material. Within this range, the anode material can exhibit good properties in terms of flexibility, durability, structural stability, and electrical properties. For example, the medium coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 2 wt% to 10 wt%, or 2 wt% to 5 wt%.

For example, the first coating layer may include the medium coating layer in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

(3) Soft coating layer: In one embodiment, the soft coating layer may be formed by sintering a soft coating material. In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating layer may have a thickness of 5 nm to 100 nm. Under this condition, the soft coating layer can have good flexibility and mechanical strength, and can prevent damage to or fracture of the anode material due to expansion of the nano-silicon particles. For example, the medium coating layer may have a thickness of 5 nm to 60 nm, 5 nm to 30 nm, or 5 nm to 20 nm.

In one embodiment, the soft coating layer may have a pencil hardness of less than 2H, as measured in accordance with ISO 15184. Under this condition, the soft coating layer can prevent fracture of the anode material due to expansion of the nano-silicon particles to secure long lifespan. For example, the soft coating layer may have a pencil hardness of B to 1H.

In one embodiment, the soft coating layer may have a density of 1.5 $g/cm^3$ or less. Under this condition, the soft coating layer can exhibit good structural stability and is lightweight. For example, the soft coating layer may have a density of 0.3 $g/cm^3$ to 1.4 $g/cm^3$.

In one embodiment, the soft coating layer may have a specific surface area (BET) of 300 $m^2/g$ or more. Under this condition, the soft coating layer can have good structural stability. For example, the soft coating layer may have a specific surface area (BET) of 300 $m^2/g$ to 2,500 $m^2/g$.

In one embodiment, the soft coating layer may have a purity (impurity content) of 1,000 ppm or more. Under this condition, the anode material can exhibit good electrical conductivity. For example, the soft coating layer may have a purity (impurity content) of 1,000 ppm to 5,000 ppm.

In one embodiment, the soft coating layer may have a resistivity of 50 $\mu\Omega\cdot$m or more. Under this condition, the anode material can exhibit good electrical conductivity. For example, the soft coating layer may have a resistivity of 50 $\mu\Omega\cdot$m to 300 $\mu\Omega\cdot$m.

In one embodiment, the soft coating layer may be present in an amount of 1 wt% to 40 wt% based on the total weight of the anode material. Within this range, the anode material is lightweight, can prevent fracture of the anode material due to expansion of the nano-silicon particles, and can exhibit good durability and structural stability. For example, the soft coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 2 wt% to 10 wt%, or 2 wt% to 5 wt%.

For example, the first coating layer may include the soft coating layer in amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

In one embodiment, the first coating layer and the hollow core may be present in a weight ratio of 1:0.5 to 1:5. Within this range, the anode material does not suffer from cracking and fracture due to expansion of the nano-silicon particles and can secure good properties in terms of high output and long lifespan. For example, the first coating layer and the hollow core may be present in a weight ratio of 1:1 to 1:4, 1:1 to 1:3, or 1:1.5 to 1:3.

**Second coating layer**

FIG. 2 is a view of an anode material according to another embodiment of the present invention. Referring to FIG. 2, the anode material 200 further includes a second coating layer 40 formed on an outer circumferential surface of the first coating layer 30.

In one embodiment, the second coating layer may have a different hardness than the first coating layer and may include at least one of a hard coating layer, a medium coating layer and a soft coating layer. Under this condition, the anode material does not suffer from cracking or fracture upon expansion of the nano-silicon particles (or the nano-silicon particles) due to intercalation of lithium ions thereinto.

For example, the second coating layer may have a higher hardness than the first coating layer. In another example, the first coating layer may have a higher hardness than the second coating layer.

For example, the first coating layer may be a different kind of layer from the second coating layer.

For example, when the second coating layer is formed by stacking at least one layer, the second coating layer adjoining the outermost layer of the first coating layer may have a different hardness than the first coating layer.

In one embodiment, the first coating layer and the second coating layer may include a soft (or hard) coating layer and a hard (or soft) coating layer sequentially formed on the outer circumferential surface of the hollow core.

For example, the anode material may include the first coating layer and the second coating layer in a weight ratio of 1:0.5 to 1:4. Within this range of weight ratio, the anode material does not suffer from cracking and fracture upon expansion of the nano-silicon particles and can secure good properties in terms of high output and long lifespan. For example, the anode material may include the first coating layer and the second coating layer in a weight ratio of 1:1 to 1:2.

For example, the first coating layer may include the soft coating layer and the second coating layer may include the hard coating layer and the medium coating layer sequentially formed. The hollow core may have a higher hardness than the first coating layer.

For example, the first coating layer may include the hard coating layer and the second coating layer may include the soft coating layer and the medium coating layer sequentially formed. The hollow core may have a lower hardness than the first coating layer.

For example, the anode material may include the soft coating layer as the first coating layer, and the hard coating layer and the medium coating layer sequentially formed as the second coating layer, in which the soft coating layer, the hard coating layer and the medium coating layer may be present in a weight ratio of 1:0.5 to 4:0.5 to 5. Within this range of weight ratio, the anode material does not suffer from cracking and fracture upon expansion of the nano-silicon particles and can secure good properties in terms of electrical conductivity, high output and long lifespan. For example, the anode material may include the soft coating layer, the hard coating layer and the medium coating layer in a weight ratio of 1: 1 to 2:0.5 to 3.

In another example, the anode material may include the hard coating layer as the first coating layer, and the soft coating layer and the medium coating layer sequentially formed as the second coating layer, in which the hard coating layer, the soft coating layer and the medium coating layer may be present in a weight ratio of 1:0.5 to 6:0.5 to 3. Within this range of weight ratio, the anode material does not suffer from cracking and fracture upon expansion of the nano-silicon particles and can secure good properties in terms of electrical conductivity, high output and long lifespan. For example, the anode material may include the hard coating layer, the soft coating layer and the medium coating layer in a weight ratio of 1:0.5 to 3:0.5 to 2.

In one embodiment, the second coating layer may be present in an amount of 1 wt% to 40 wt% based on the total weight of the anode material. Within this range, the second coating layer has good electrical conductivity, can prevent cracking and fracture of the anode material upon expansion of the nano-silicon particles, and can minimize reduction in capacity to secure long lifespan. For example, the second coating layer may be present in an amount of 1 wt% to 30 wt%, 1 wt% to 25 wt%, 1 wt% to 20 wt%, 2 wt% to 20 wt%, 2 wt% to 15 wt%, 2 wt% to 10 wt%, or 3 wt% to 10 wt%. For example, the second coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

**Method of preparing silicon carbon composite anode material**

Another aspect of the present invention relates to a method of preparing the silicon carbon composite anode material. In one embodiment, the anode material preparation method may include: a dried powder preparation step S10; a first intermediate material preparation step S20; and a second intermediate material preparation step S30.

More specifically, the anode material preparation method includes: (S10) drying a nano-silicon slurry to prepare dried powder; (S20) preparing a first intermediate material using the dried powder and a first coating material; and (S30) preparing a second intermediate material using the first intermediate material and a second coating material.

The second intermediate material includes a hollow core having a hollow portion therein, nano-silicon particles packed in the hollow portion, and a first coating layer formed on an outer circumferential surface of the hollow core.

The first coating layer includes a hard coating layer, a medium coating layer or a soft coating layer, in which the hard coating layer has a higher hardness than the medium coating layer, the medium coating layer has a higher hardness than the soft coating layer, and the hollow core has a different hardness than the first coating layer.

**(S10) Dried powder preparation step**

In this step, a nano-silicon slurry is dried to prepare dried powder.

In one embodiment, the nano-silicon slurry may include nano-silicon particles. In one embodiment, the nano-silicon slurry may be prepared by dispersing silicon powder and a dispersant in a solvent to prepare a dispersion, followed by grinding the dispersion.

In one embodiment, the solvent may include at least one of water, ethanol, isopropyl alcohol, and potassium hydroxide (KOH). The solvent can secure good miscibility and dispersibility of the nano-silicon slurry without oxidation of the silicon powder.

In one embodiment, the dispersant may include at least one of poly(vinyl pyrrolidone), nitrile butadiene rubber, hydrogenated nitrile butadiene rubber, stearic acid, palmitic acid, oleic acid, and lauric acid. In another example, the dispersant may include at least one of stearic acid, pyrolysis fuel oil pitch, coal tar pitch, coal tar, glucose, sucrose, polyimide, polyacrylic acid (PAA), and polyvinyl alcohol (PVA). The dispersant can secure good dispersion of the silicon powder while allowing easy preparation of the nano-silicon slurry including the nano-silicon particles. For example, the dispersant may include stearic acid. For example, the dispersant may be a mixture of stearic acid and N-methyl pyrrolidone (NMP).

In one embodiment, the nano-silicon slurry may include 100 parts by weight of the silicon powder, 5 to 1500 parts by weight of the solvent, and 0.1 to 30 parts by weight of the dispersant. Under this condition, the nano-silicon slurry can secure good miscibility and dispersion of the nano-silicon particles and can be easily prepared. For example, the nano-silicon slurry may include 100 parts by weight of the silicon powder, 800 to 1,000 parts by weight of the solvent, and 0.5 to 25 parts by weight of the dispersant.

For example, the nano-silicon slurry may be prepared by adding the dispersant to the solvent in amounts as above, mixing the dispersant with the solvent, and mixing the silicon powder with the mixture to prepare a dispersion, followed by grinding the dispersion.

In one embodiment, grinding may be performed by milling. In one embodiment, milling may be performed using a bead-mill, a ball-mill, a high energy ball-mill, a planetary mill, a stirred ball-mill, a vibration mill, or the like.

For example, the ball-mill may be formed of a chemically inert material that does not react with the silicon powder and other organic components. For example, the ball-mill may include zirconia (ZrOz). In one embodiment, the ball mill may have an average particle diameter of 0.1 mm to 1 mm. Under this condition, the nano-silicon particles can be easily prepared.

For example, a weight ratio of zirconia beads to the silicon powder (zirconia beads/silicon powder, ball per ratio) may range from 1/3.5 to 1/10. In addition, upon dispersion of the dispersant, a rotor of the grinding machine may be rotated at 2,200 rpm to 2,600 rpm.

In one embodiment, the silicon powder may have an average particle diameter (d50) of 0.2 μm to 3.5 μm. Under this condition, the silicon powder can be easily mixed and ground, and the nano-silicon particles having a desired average particle diameter can be easily prepared. For example, the silicon powder may have an average particle diameter (d50) of 0.2 μm to 3 μm. In another example, the silicon powder may have an average particle diameter (d50) of 0.3 μm to 1.8 μm.

In one embodiment, the silicon powder may have a maximum particle diameter (Dmax) of 10 μm or less. Under this condition, the nano-silicon particles having a desired average particle diameter can be easily prepared.

In one embodiment, the silicon powder may be present in an amount of 6.5 wt% to 17.8 wt% in the nano-silicon slurry. Under this condition, the nano-silicon slurry can secure good miscibility and workability.

In one embodiment, the nano-silicon slurry may have a viscosity of 2,000 cP to 6,500 cP (at 25°C). Under this condition, the nano-silicon slurry can secure good miscibility and dispersion, and the number of nano-silicon particles packed in the hollow portion can be easily controlled.

In one embodiment, the nano-silicon particles may have an average particle diameter of 5 nm to 500 nm. In another embodiment, the nano-silicon particles may have an average particle diameter (d50) of 500 nm or less, more preferably 5 nm to 300 nm, 5 nm to 280 nm, 5 nm to 260 nm, 180 nm to 230 nm, 190 nm to 220 nm, or 200 nm to 220 nm. In addition, controlling the maximum average particle diameter of the nano-silicon particles is very important. For example, the nano-silicon particles may have a maximum particle diameter (Dmax) of 380 nm or less, preferably 320 nm to 360 nm. More preferably, the nano-silicon particles have a maximum particle diameter (Dmax) of 300 nm to 340 nm. A lower Dmax value can cause increase in viscosity of the nano-silicon slurry and the viscosity of the nano-silicon slurry may be adjusted to 6,500 cP or less (at 25°C).

In one embodiment, the nano-silicon particles may have a spherical, polyhedral, elliptical or amorphous shape. For example, the nano-silicon particles may have a spherical shape.

The particle size of the anode material can be easily adjusted by drying the nano-silicon slurry. For example, drying may be performed using a spray dryer or the like. For example, spray drying may be performed using a spray dryer provided with a single-fluid nozzle, a two-fluid nozzle, or a four-fluid nozzle.

In one embodiment, the dried powder may have a spherical, polyhedral or elliptical shape. For example, the dried powder may have a spherical shape.

In one embodiment, the dried powder may have an average particle diameter (or size) of 0.1 $\mu$m to 15 $\mu$m. Under this condition, the dried powder can exhibit good miscibility and formability.

In one embodiment, as prepared by spray-drying the nano-silicon slurry using a single-fluid nozzle at an air flow rate of 650 sccm to 850 sccm with the spray dryer set to have an outlet temperature of 70°C to 130°C, the dried powder may have an average particle diameter of 7 $\mu$m to 14 $\mu$m. In another embodiment, as prepared by spray drying the nano-silicon slurry using a four-fluid nozzle, the dried powder may have an average particle diameter of 0.1 $\mu$m to 8 $\mu$m.

**(S20) First intermediate material preparation step**

In this step, a first intermediate material is prepared using the dried powder and a first coating material.

In one embodiment, the first coating material may include at least one of a hard coating material, a medium coating material, and a soft coating material.

In one embodiment, the first intermediate material may be prepared by mixing the dried powder with the hard coating material, followed by sintering.

The hard coating material forms the hollow core and can secure good hardness and strength to prevent fracture of the anode material upon expansion of the nano-silicon particles while exhibiting good electrical properties.

For example, the hard coating material may include a carbon material.

In one embodiment, the hard coating material may have a pencil hardness of 4H or higher, as measured in accordance with ISO 15184. Under this condition, the hard coating material can prevent fracture of the anode material upon expansion of the nano-silicon particles. For example, the hard coating material may have a pencil hardness of 4H to 6H. For example, the hard coating material may include a carbon material having a pencil hardness of 4H to 6H.

For example, the hard coating material may include NanoMollisAdamas products available from Lemon Energy Co., Ltd.

The hard coating material may have an amorphous phase. In addition, the hard coating material is prepared through self-assembly and exhibits good properties in terms of isotropic properties and heat stability to prevent structural change at high temperature (at about 3,000°C).

The hard coating material may have high-gas impermeability while exhibiting good chemical resistance and electrical conductivity. In addition, the hard coating material is dust free and has a purity (impurity content) of 5 ppm or less or a purity (impurity content) of 2 ppm or less. Under this condition, the hard coating material can have good strength and electrical properties, and the anode material can have good electrical conductivity.

In one embodiment, the hard coating material may have a resistivity of 3 $\mu\Omega\cdot$m to 5 $\mu\Omega\cdot$m. Under this condition, the anode material can have good electrical conductivity.

In one embodiment, the hard coating material may have an average particle diameter (d50) of 3 nm to 2.5 $\mu$m. Under this condition, the first intermediate material can be easily formed. For example, the hard coating material may have an average particle diameter (d50) of 5 nm to 500 nm, 10 nm to 500 nm, or 15 nm to 200 nm.

In one embodiment, sintering may be performed at 900°C to 1,050°C. Under this condition, the first intermediate material can be easily prepared. For example, sintering may be performed at 965°C to 1,000°C.

For example, sintering may be performed under an inert gas atmosphere. The inert gas may include nitrogen.

For example, the first intermediate material may be prepared by dry grinding the sintered product using attachment mills, air classifier mills (ACM), jet mills, pin mills, and the like, followed by sieving the ground product.

In another embodiment, the first intermediate material may be prepared by heat treatment of the dried powder using the medium coating material. For example, the first intermediate material may be prepared by heat treatment of the dried powder in a hydrocarbon gas atmosphere. In another example, the first intermediate material may be prepared by mixing the dried powder with carbon black, followed by heat treatment.

In one embodiment, the medium coating material may include at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

For example, heat treatment may be performed at 850°C to 970°C. Under this condition, the first intermediate material can be easily prepared. For example, heat treatment may be performed at 890°C to 910°C.

In one embodiment, heat treatment may be performed in a vacuum. Under this condition, the hydrocarbon gas can be evenly diffused between the dried powder particles in the chamber, thereby forming a uniform medium coating layer upon heat treatment. For example, heat treatment may be performed in a vacuum of $10^{-1}$ torr to $10^{-6}$ torr.

In one embodiment, the first intermediate material preparation step may include: raising the inner temperature of the chamber receiving the dried powder therein to 850°C to 970°C while reducing the inner pressure of the chamber to $10^{-1}$ torr to $10^{-6}$ torr; introducing hydrocarbon gas into the depressurized chamber to contact the dried powder; and gradually increasing the inner pressure of the chamber while maintaining the raised temperature of the chamber to form a medium coating layer on an outer circumferential surface of the dried powder through pyrolysis of the hydrocarbon gas.

Upon decompression of the chamber under the above condition, the hydrocarbon gas can easily spread between the dried powder particles in the chamber, whereby the uniform medium coating layer can be evenly formed. In particular, the hydrocarbon gas can easily spread between multiple dried powder particles, thereby forming a first intermediate material having good uniformity of the medium coating layer and a uniform thickness.

In addition, upon increase in inner pressure of the chamber under the above condition, the medium coating layer with good uniformity is formed on the outer circumferential surface of the dried powder, thereby forming the first intermediate material.

Here, the inner pressure of the chamber may be gradually increased from a vacuum. For example, the inner pressure of the chamber may be gradually increased to $10^1$ to $10^5$ torr to form the first intermediate material.

In another embodiment, the first intermediate material may be prepared by sintering the dried powder and the soft coating material. For example, the dried powder may be mixed with the soft coating material, followed by sintering at 850°C to 975°C. Under this condition, the first intermediate material including the soft coating layer can be easily formed by sintering.

In one embodiment, the soft coating material may include at least one of pitch, coke and carbon precursors formed of other organic materials. For example, the pitch may include at least one of pyrolysis fuel oil pitch and coal tar pitch.

In one embodiment, the first intermediate material may be prepared by blending a soft coating solution containing the dried powder, the soft coating material, and a solvent.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the soft coating material may have an average particle diameter (d50) of 0.03 $\mu$m to 10 $\mu$m. Under this condition, the first intermediate material can be easily formed. For example, the soft coating material may have an average particle diameter (d50) of 0.3 $\mu$m to 5 $\mu$m.

In one embodiment, the first intermediate material may be prepared by mixing the dried powder with the first coating material to prepare a mixture, pressing the mixture at 20 atm to 60 atm, followed by sintering or heat treating a pressed product. In preparation of the pressed product under this pressing condition, the anode material can secure good properties in terms of electrical properties, long lifespan and capacity through adjustment of the inner porosity of the anode material.

**(S30) Second intermediate material preparation step**

In this step, a second intermediate material is prepared using the first intermediate material and the second coating material.

In one embodiment, the second intermediate material includes a hollow core having a hollow portion therein, nano-silicon particles packed in the hollow portion, and a first coating layer formed on an outer circumferential surface of the hollow core.

In one embodiment, the first coating layer includes a hard coating layer, a medium coating layer or a soft coating layer, in which the hard coating layer has a higher hardness than the medium coating layer and the medium coating layer has a higher hardness than the soft coating layer.

In one embodiment, the second coating material may include at least one of a hard coating material, a medium coating material and a soft coating material, in which the hollow core has a different hardness than the first coating layer.

In one embodiment, the second intermediate material may further include the nano-carbon particles packed in the hollow portion. The nano-carbon particles may be dispersed between the nano-silicon particles.

In one embodiment, the second intermediate material may be prepared by sintering a second mixture including the first intermediate material and the hard coating material.

For example, the hard coating material may include a carbon material.

In one embodiment, the hard coating material may have a pencil hardness of 4H or higher, as measured in accordance with ISO 15184. Under this condition, the hard coating material can prevent fracture of the anode material upon expansion of the nano-silicon particles while securing good properties in terms of high output and electrical properties. For example, the hard coating material may have a pencil hardness of 4H to 6H. For example, the hard coating material may include a carbon material having a pencil hardness of 4H to 6H.

For example, the hard coating material may include NanoMollisAdamas products available from Lemon Energy Co., Ltd.

The hard coating material may have an amorphous phase. In addition, the hard coating material is prepared through self-assembly and exhibits good isotropic properties and good heat stability to prevent structural change at high temperature (at about 3,000°C).

The hard coating material may have high-gas impermeability while exhibiting good chemical resistance and electrical conductivity. In addition, the hard coating material is dust free and has a purity (impurity content) of 5 ppm or less or a purity (impurity content) of 2 ppm or less. Under this condition, the hard coating material can have good strength and electrical properties, and the anode material can have good electrical conductivity

In one embodiment, the hard coating material may have a resistivity of 3 $\mu\Omega\cdot$m to 5 $\mu\Omega\cdot$m. Under this condition, the anode material can have good electrical conductivity.

In one embodiment, the hard coating material may have an average particle diameter (d50) of 3 nm to 2.5 $\mu$m. Under this condition, the second intermediate material including the first coating layer can be easily formed. For example, the hard coating material may have an average particle diameter (d50) of 5 nm to 1,000 nm, 10 nm to 500 nm, or 15 nm to 200 nm.

In one embodiment, sintering may be performed at 900°C to 1,050°C. Under this condition, the hard coating layer can be easily formed. For example, sintering may be performed at 965°C to 1,000°C.

In another embodiment, the second intermediate material may be prepared by sintering a second mixture including the first intermediate material and the soft coating material.

In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating material may have an average particle diameter (d50) of 3 $\mu$m to 10 $\mu$m. Under this condition, the soft coating layer can be easily formed on the surface of the first intermediate material. For example, the soft coating material may have an average particle diameter (d50) of 3 $\mu$m to 5 $\mu$m.

In one embodiment, sintering may be performed at 850°C to 975°C. Under this condition, the soft coating layer can be easily formed. For example, sintering may be performed at 930°C to 960°C.

In one embodiment, the soft coating layer may have a pencil hardness of B to 3H, as measured in accordance with ISO 15184. Under this condition, the soft coating layer can very effectively relieve expansion of the anode material due to expansion of the nano-silicon particles to prevent fracture of the hard hollow core while securing long lifespan. For example, the soft coating layer may have a pencil hardness of B to 1H.

In one embodiment, the soft coating layer may have a density of 1.5 g/cm$^3$ or less. Under this condition, the anode material can exhibit good structural stability and is lightweight. For example, the soft coating layer may have a density of 0.3 g/cm$^3$ to 1.5 g/cm$^3$.

In one embodiment, the soft coating layer may have a specific surface area (BET) of 300 m$^2$/g or more. Under this condition, the anode material can have good structural stability. For example, the soft coating layer may have a specific surface area (BET) of 300 m$^2$/g to 2,500 m$^2$/g.

In one embodiment, the soft coating layer may have a purity (impurity content) of 1,000 ppm or more. Under this condition, the anode material can exhibit good electrical conductivity. For example, the soft coating layer may have a purity (impurity content) of 1,000 ppm to 5,000 ppm.

In one embodiment, the soft coating layer has a resistivity of 50 $\mu\Omega\cdot$m or more. Under this condition, the anode material can exhibit good electrical conductivity. For example, the soft coating layer has a resistivity of 50 $\mu\Omega\cdot$m to 300 $\mu\Omega\cdot$m.

In another embodiment, the second intermediate material may be prepared by heat treatment of the first intermediate material using the medium coating material.

In one embodiment, the medium coating material may include at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

For example, the second intermediate material may be prepared through heat treatment of the first intermediate material in a hydrocarbon gas atmosphere. In another example, the second intermediate material may be prepared by mixing the first intermediate material with carbon black, followed by heat treatment.

For example, heat treatment may be performed at 850°C to 970°C. Under this condition, the second intermediate material can be easily prepared. For example, heat treatment may be performed at 890°C to 910°C.

In one embodiment, heat treatment may be performed in a vacuum. Under this condition, the hydrocarbon gas can be evenly diffused between the first intermediate material particles in a chamber, thereby forming the second intermediate material through formation of a uniform medium coating layer by heat treatment. For example, heat treatment may be performed in a vacuum of $10^{-1}$ torr to $10^{-6}$ torr.

In one embodiment, the second intermediate material preparation step may include: raising the inner temperature of the chamber receiving the first intermediate material to 850°C to 970°C while reducing the inner pressure of the chamber to $10^{-1}$ torr to $10^{-6}$ torr; introducing hydrocarbon gas into the depressurized chamber to contact the first intermediate material; and gradually increasing the inner pressure of the chamber while maintaining the raised temperature of the chamber to form a medium coating layer on an outer circumferential surface of the first intermediate material through pyrolysis of the hydrocarbon gas.

Upon decompression of the chamber under the above condition, the hydrocarbon gas can easily spread between the first intermediate material particles in the chamber, whereby the uniform medium coating layer can be formed. In particular, the hydrocarbon gas can easily spread between multiple first intermediate material particles, thereby forming a second intermediate material in which the medium coating layer has good uniformity and a uniform thickness.

In addition, upon increase in inner pressure of the chamber under the above condition, the medium coating layer with good uniformity is formed on the outer circumferential surface of the first intermediate material, thereby forming the second intermediate material.

Here, the inner pressure of the chamber may be gradually increased from a vacuum. For example, the inner pressure of the chamber may be gradually increased to $10^1$ to $10^5$ torr to form the second intermediate material.

In one embodiment, the medium coating layer may have a pencil hardness of 2H to less than 4H, as measured in accordance with ISO 15184. Under this condition, the medium coating layer can very effectively relieve expansion of the anode material due to expansion of the nano-silicon particles and can prevent fracture of the hard hollow core while securing long lifespan.

In one embodiment, the medium coating layer may have a density of less than 1.8 g/cm$^3$. Under this condition, the medium coating layer can exhibit good structural stability and is lightweight. For example, the medium coating layer may have a density of greater than 1.5 g/cm$^3$ to 1.7 g/cm$^3$.

In one embodiment, the medium coating layer may have a specific surface area (BET) of 100 m$^2$/g to 200 m$^2$/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 $\mu\Omega\cdot$m to 40 $\mu\Omega\cdot$m. Under this condition, the anode material can exhibit good electrical conductivity.

In one embodiment, the hollow portion may be packed with the nano-silicon particles included in the second intermediate material in the hexagonal close packed (HCP) or face-centered cubic (FCC) structure. With this structure, it is possible to calculate the maximum number of the expanded nano-silicon particles capable of being packed in the hollow portion.

The number of nano-silicon particles packed in the hollow portion may be set in consideration of the maximum expandable volume upon intercalation of lithium ions. For example, when the nano-silicon particles are expanded 4 times in volume, the number of nano-silicon particles packed in the hollow portion may be calculated based on an assumption that the hollow portion may be packed with the nano-silicon particles in the hexagonal close packed (HCP) or face-centered cubic (FCC) structure.

For example, upon expansion of the spherical nano-silicon particles having a radius r to 4 times in volume, the expanded nano-silicon particles may have a radius r' equal to 1.5874*r. The radius r' of the expanded nano-silicon particles may be deduced from the formula: $(4/3)*\pi*(r')^3 = 4*(4/3)*\pi*(r)^3$ ($r' = (\sqrt[3]{4})*r \approx 1.5874*r$).

In addition, the number of nano-silicon particles packed in the hollow portion may be deduced in consideration of the particle-packing rate ($\pi*(\sqrt{3}/2) \approx 0.7405$) in the hexagonal close packed or face-centered cubic structure.

In one embodiment, when the nano-silicon particles having a radius (r) of 100 nm are expanded 4 times in volume, the expanded nano-silicon particles may have a radius (r') of about 158 nm (158.74 nm). In another embodiment, when the nano-silicon particles having a radius (r) of 150 nm are expanded 4 times in volume, the expanded nano-silicon particles may have a radius (r') of about 238 nm (238.11 nm).

In one embodiment, the maximum number (n) of nano-silicon particles having a radius r and capable of being packed in the hollow portion having a radius R may satisfy Formula 1.

[Formula 1]

$$n \leq \frac{0.7405\, q^3 + 0.484(1 - q^3)}{d^3}$$ ,

where d denotes a relative diameter of the expanded nano-silicon particles, as calculated according to Formula 1-1, and q denotes a relative diameter of the expanded nano-silicon particles at the center of the hollow portion, as calculated according to Formula 1-2.

[Formula 1-1]

d = r'/R,

where R denotes the radius of the hollow portion and r' denotes the radius of the expanded nano-silicon particles, r' = 1.5874*r (r being the radius of the nano-silicon particles).

[Formula 1-2]

q = 1-2*d,

where d is the same as defined above.

In Formula 1, the maximum number (n) of nano-silicon particles capable of being packed in the hollow portion may be deduced from $(1/d^3) * (0.7405*q^3 + 0.484*(1-q^3))$.

When the number of nano-silicon particles packed in the hollow portion is set under conditions of Formula 1, the hollow core (or the anode material) can prevent cracking or fracture due to expansion of the nano-silicon particles.

In one embodiment, the hollow portion may have an average diameter of 3 $\mu$m to 10 $\mu$m and the nano-silicon particles may have an average particle diameter of 50 nm to 500 nm. Under these conditions of the average diameter of the hollow portion and the average particle diameter of the nano-silicon particles, the anode material allows easy control of the number of nano-silicon particles and can prevent fracture of the hollow core due to expansion of the nano-silicon particles while securing high capacity and high output of the anode material.

For example, the hollow portion may have a radius of 1.5 $\mu$m to 5 $\mu$m (average diameter: 3 $\mu$m to 10 $\mu$m) and the nano-silicon particles may have an average particle diameter (d50) of 100 nm to 500 nm (radius: 50 nm to 250 nm).

In one embodiment, the number of nano-silicon particles packed in the hollow portion may range from 1,100 to 15,000. Under this condition, the anode material allows easy control of the number of nano-silicon particles and can prevent fracture of the hollow core due to expansion of the nano-silicon particles while securing high capacity and high output of the anode material.

In one embodiment, the anode material may include one or more types of nano-silicon particles having different average particle diameters.

In one embodiment, the anode material may include first and second nano-silicon particles having a radius ri and a radius rz, respectively. The radius ri may be the same as or different from the radius rz.

In one embodiment, the anode material may include the first and second nano-silicon particles having the radius ri and the radius rz, respectively, and the numbers $(n_1, n_2)$ of first and second nano-silicon particles packed in the hollow portion having a radius R may satisfy Formula 2.

[Formula 2]

$$n_1 \left(\frac{r_1'}{R}\right)^3 + n_2 \left(\frac{r_2'}{R}\right)^3 \leq 1$$ ,

where $r_1'$ denotes the radius of the first expanded nano-silicon particles, $r_2'$ denotes the radius of the second expanded nano-silicon particles, and R is the radius of the hollow portion, $r_1'$ and $r_2'$ being 1.5874*ri and $1.5874*r_2$, respectively.

When the number of nano-silicon particles packed in the hollow portion is set under conditions of Formula 2, the anode material can prevent cracking or fracture of the hollow core (or the anode material) due to expansion of the nano-silicon particles.

In one embodiment, when the first and second nano-silicon particles having the radius ri and the radius $r_2$ are

expanded 4 times in volume, the first expanded nano-silicon particles and the second expanded nano-silicon particles may have a radius $r_1'$ and $r_2'$, which correspond to $1.5874*r_1$ and $1.5874*r_2$, respectively.

Accordingly, the total volume of the first and second expanded nano-silicon particles is equal to or less than the volume of the hollow portion ($n_1* 4*(4/3)*\pi*(r_1')^3 + n_2* 4*(4/3)*\pi*(r_2')^3 \leq 4*(4/3)*\pi*(R)^3$) and the conditions for Formula 2 may be deduced therefrom.

In one embodiment, the hollow portion may have an average diameter of 6 $\mu$m to 10 $\mu$m (radius: 3 $\mu$m to 5 $\mu$m) and the first and second nano-silicon particles may have an average particle diameter (d50) of 100 nm to 500 nm (radius: 50 nm to 250 nm). Under this condition, the anode material can secure good dispersion of the nano-silicon particles, can prevent fracture of the hollow core due to expansion of the nano-silicon particles, and can exhibit good properties in terms of high capacity and high output.

In one embodiment, the number of nano-silicon particles packed in the hollow portion may range from 1,100 to 15,000. Under this condition, the anode material allows easy control of the number of nano-silicon particles, can prevent fracture of the hollow core due to expansion of the nano-silicon particles, and can exhibit good properties in terms of high capacity and high output.

In one embodiment, the hollow portion may have an average diameter of 6 $\mu$m to 10 $\mu$m (radius: 3 $\mu$m to 5 $\mu$m), the number of first nano-silicon particles having an average particle diameter (d50) of 180 nm to 220 nm (radius: 90 nm to 110 nm) may be 950 to 5,000, and the number of first nano-silicon particles having an average particle diameter (d50) of 280 nm to 320 nm (radius: 140 nm to 160 nm) may be 150 to 3,000. Under this condition, the anode material can secure good dispersion of the nano-silicon particles, can prevent fracture and cracking of the hollow core due to expansion of the nano-silicon particles, and can exhibit good properties in terms of high capacity and high output.

In one embodiment, the anode material may have a nano-silicon particle-packing density of 75% or less. The nano-silicon particle-packing density may mean the number of nano-silicon particles actually packed in the hollow portion relative to the maximum number of nano-silicon particles capable of being packed in the hollow portion. For example, the packing density may be represented by Formula 3.

[Formula 3]

$$\text{Packing density} = (n_1/n_0) * 100,$$

where $n_0$ denotes the maximum number of nano-silicon particles capable of being packed in the hollow portion, as calculated by Formula 1-3 and $n_1$ denotes the number of nano-silicon particles packed in the hollow portion, as calculated by Formula 1.

ni may be deduced in the same manner as in Formula 1 or Formula 2.

$n_0$ may be deduced according to Formula 1-3.

[Formula 1-3]

$$n_0 = \frac{0.7405\, q_0^3 + 0.484(1 - q_0^3)}{d_0^3},$$

where $d_0$ denotes a relative diameter of the nano-silicon particles, as calculated according to Formula 1-4, and $q_0$ denotes a relative diameter of the nano-silicon particles at the center of the hollow portion, as calculated according to Formula 1-5.

[Formula 1-4]

$$d_0 = r/R,$$

where R is the radius of the hollow portion and r is the radius of the nano-silicon particles.

[Formula 1-5]

$$q_0 = 1 - 2*d_0,$$

where $d_0$ is the same as defined above.

With the above condition of packing density, the anode material can secure good properties in terms of high capacity and high output without fracture of the anode material due to expansion of the nano-silicon particles. For example, the anode material may have a nano-silicon particle-packing density of 20% to 50%. In another example, the anode material may have a nano-silicon particle-packing density of 20% to 25%

In one embodiment, the first coating layer and the hollow core may be present in a weight ratio of 1:0.5 to 1:5. Within this range, the anode material can secure good properties in terms of high capacity and high output without fracture of the anode material due to expansion of the nano-silicon particles. For example, the first coating layer and the hollow core may be present in a weight ratio of 1:1 to 1:4, 1:1 to 1:3, or 1:1.5 to 1:3.

**(S40) Second coating layer formation step**

In another embodiment, the method may further include: forming a second coating layer on an outer circumferential surface of the first coating layer of the second intermediate material (S40) after preparation of the second intermediate material (S30).

In one embodiment, the second coating layer may have a different hardness than the first coating layer and may include at least one of a hard coating layer, a medium coating layer and a soft coating layer.

The second coating layer may be formed using the second intermediate material and a third coating material. The third coating material may include at least one of a hard coating material, a soft coating material, and a medium coating material.

In one embodiment, the second coating layer may have a different hardness than the first coating layer and may include at least one of the hard coating layer, the medium coating layer and the soft coating layer. Under this condition, the second coating layer can prevent breakage or fracture of the anode material due to expansion of the nano-silicon particles (or the nano-silicon particles) by intercalation of lithium ions.

For example, the second coating layer may have a higher hardness than the first coating layer. In another example, the first coating layer may have a higher hardness than the second coating layer.

For example, the first coating layer may be a different kind of layer from the second coating layer.

For example, when the second coating layer includes at least one layer, the second coating layer adjoining the outermost layer of the first coating layer may have a different hardness than the first coating layer.

In one embodiment, the second coating layer may have a thickness of 10 nm to 150 nm. Under this condition, the second coating layer can have good hardness and mechanical strength to prevent damage to or fracture of the anode material even upon expansion of the nano-silicon particles.

For example, the second coating layer may include a hard coating layer. In one embodiment, the hard coating layer may be formed by mixing the second intermediate material with a third coating material (hard coating material), followed by sintering.

In one embodiment, the hard coating layer may be formed using the hard coating material by sintering. With the hard coating layer, the anode material can have good strength and durability to prevent fracture of the anode material upon expansion of the nano-silicon particles, can exhibit good electrical conductivity and long lifespan, and can prevent reduction in capacity.

In one embodiment, sintering may be performed at 900°C to 1,050°C. Under this condition, the hard coating layer can be easily prepared. For example, sintering may be performed at 965°C to 1,000°C.

In one embodiment, the hard coating layer may have a thickness of 5 nm to 100 nm. Under this condition, the hard coating layer can have good hardness and mechanical strength to prevent damage to or fracture of the anode material even upon expansion of the nano-silicon particles.

In one embodiment, the hard coating layer may have a density of 1.8 g/cm$^3$ to 2.5 g/cm$^3$. Under this condition, the anode material can exhibit good structural stability and is lightweight. For example, the hard coating layer may have a density of 1.8 g/cm$^3$ to 2.1 g/cm$^3$.

In one embodiment, the hard coating layer may have a specific surface area (BET) of 100 m$^2$/g or less. Under this condition, the anode material can have good structural stability.

In one embodiment, the hard coating layer may have a purity (impurity content) of 100 ppm or less. Under this condition, the anode material can exhibit good electrical conductivity.

In one embodiment, the hard coating layer may have a resistivity of 3 $\mu\Omega\cdot$m to 5 $\mu\Omega\cdot$m. Under this condition, the anode material can exhibit good electrical conductivity.

In one embodiment, the hard coating layer may have a pencil hardness of 4H or higher, as measured in accordance with ISO 15184. Under this condition, the hard coating layer has good durability and strength and can prevent damage to or fracture of the hollow core (or the anode material) upon expansion of the nano-silicon particles due to intercalation of lithium ions thereinto. For example, the hard coating material may have a pencil hardness of 4H to 6H.

In another example, the second coating layer may include the medium coating layer. The medium coating layer may be formed through heat treatment of the second intermediate material using a third coating material (medium coating material). The medium coating material may include a carbon source.

In one embodiment, the medium coating layer may be prepared by heat treatment of the second intermediate material in a hydrocarbon gas atmosphere.

In one embodiment, the medium coating material may include at least one of hydrocarbon gas and carbon black as the third coating material. For example, the hydrocarbon gas may include at least one of methane ($CH_4$), ethane ($C_2H_6$), propane ($C_3H_8$), butane ($C_4H_{10}$), and pentane ($C_5H_{12}$).

For example, heat treatment may be performed at 850°C to 970°C. Under this condition, the medium coating layer can be easily prepared. For example, heat treatment may be performed at 890°C to 910°C.

In one embodiment, heat treatment may be performed in a vacuum. Under this condition, the hydrocarbon gas can be evenly diffused, thereby forming a uniform medium coating layer. For example, heat treatment may be performed in a vacuum of $10^{-1}$ torr to $10^{-6}$ torr.

In one embodiment, the medium coating layer may have a pencil hardness of 2H to less than 4H, as measured in accordance with ISO 15184. Under this condition, the medium coating layer can very effectively relieve expansion of the anode material due to expansion of the nano-silicon particles and can prevent fracture of the hard hollow core while securing long lifespan.

In one embodiment, the medium coating layer may have a thickness of 5 nm to 120 nm. Under this condition, the medium coating layer can prevent damage to or fracture of the anode material upon expansion of the nano-silicon particles.

In one embodiment, the medium coating layer may have a density of less than 1.8 g/cm$^3$. Under this condition, the medium coating layer can exhibit good structural stability and is lightweight. For example, the medium coating layer may have a density of greater than 1.5 g/cm$^3$ to 1.7 g/cm$^3$.

In one embodiment, the medium coating layer may have a specific surface area (BET) of 100 m$^2$/g to 200 m$^2$/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 $\mu\Omega\cdot$m to 40 $\mu\Omega\cdot$m. Under this condition, the anode material can have good electrical conductivity.

In another example, the second coating layer may include the soft coating layer. For example, the soft coating layer may be formed by mixing the second intermediate material with a third coating material (soft coating material), followed by sintering.

In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating material may have an average particle diameter (d50) of 3 $\mu$m to 10 $\mu$m. Under this condition, the soft coating layer can be easily formed on the surface of the first coating layer. For example, the soft coating material may have an average particle diameter (d50) of 3 $\mu$m to 5 $\mu$m.

In one embodiment, sintering may be performed at 850°C to 975°C. Under this condition, the soft coating layer can be easily formed. For example, sintering may be performed at 930°C to 960°C.

In one embodiment, the soft coating layer may have a pencil hardness of B to 3H, as measured in accordance with ISO 15184. Under this condition, the soft coating layer can very effectively relieve expansion of the anode material due to expansion of the nano-silicon particles and can prevent fracture of the hard hollow core while securing long lifespan. For example, the soft coating layer may have a pencil hardness of B to 1H.

In one embodiment, the soft coating layer may have a density of 1.5 g/cm$^3$ or less. Under this condition, the anode material can exhibit good structural stability and is lightweight. For example, the soft coating layer may have a density of 0.3 g/cm$^3$ to 1.5 g/cm$^3$.

In one embodiment, the soft coating layer may have a specific surface area (BET) of 300 m$^2$/g or more. Under this condition, the anode material can have good structural stability. For example, the soft coating layer may have a specific surface area (BET) of 300 m$^2$/g to 2,500 m$^2$/g.

In one embodiment, the soft coating layer may have a purity (impurity content) of 1,000 ppm or more. Under this condition, the anode material can exhibit good electrical conductivity. For example, the soft coating layer may have a purity (impurity content) of 1,000 ppm to 5,000 ppm.

In one embodiment, the soft coating layer has a resistivity of 50 $\mu\Omega\cdot$m or more. Under this condition, the anode material can exhibit good electrical conductivity. For example, the soft coating layer has a resistivity of 50 $\mu\Omega\cdot$m to 300 $\mu\Omega\cdot$m.

For example, the anode material may include the first coating layer and the second coating layer in a weight ratio of 1:0.5 to 1:4. Within this range of weight ratio, the anode material does not suffer from cracking and fracture upon expansion of the nano-silicon particles and can secure good properties in terms of electrical conductivity, high output and long lifespan. For example, the anode material may include the first coating layer and the second coating layer in a weight ratio of 1:1 to 1:2.

For example, the first coating layer may include the soft coating layer and the second coating layer may include the hard coating layer and the medium coating layer sequentially formed. The hollow core may have a higher hardness than the first coating layer.

For example, the first coating layer may include the hard coating layer and the second coating layer may include the soft coating layer and the medium coating layer sequentially formed. The hollow core may have a lower hardness than the first coating layer.

For example, the anode material may include the soft coating layer as the first coating layer, and the hard coating layer and the medium coating layer sequentially formed as the second coating layer, in which the soft coating layer, the hard coating layer and the medium coating layer may be present in a weight ratio of 1:0.5 to 4:0.5 to 5. Within this range of weight ratio, the anode material does not suffer from cracking and fracture upon expansion of the nano-silicon particles and can secure good properties in terms of electrical conductivity, high output and long lifespan. For example, the anode material may include the soft coating layer, the hard coating layer and the medium coating layer in a weight ratio of 1:1 to 2:0.5 to 3.

In another example, the anode material may include the hard coating layer as the first coating layer, and the soft coating layer and the medium coating layer sequentially formed as the second coating layer, in which the hard coating layer, the soft coating layer and the medium coating layer may be present in a weight ratio of 1:0.5 to 6:0.5 to 3. Within this range of weight ratio, the anode material does not suffer from cracking and fracture upon expansion of the nano-silicon particles and can secure good properties in terms of electrical conductivity, high output and long lifespan. For example, the anode material may include the hard coating layer, the soft coating layer and the medium coating layer in a weight ratio of 1:0.5 to 3:0.5 to 2.

## Secondary battery including silicon carbon composite anode material

A further aspect of the present invention relates to a secondary battery including the silicon carbon composite anode material. In one embodiment, the secondary battery may include a cathode; an anode; and an electrolyte disposed between the cathode and the anode, wherein the anode includes the anode material.

The secondary battery may include a lithium secondary battery. In one embodiment, the lithium secondary battery may include a cathode including a cathode material; an anode spaced apart from the cathode and including the anode material; an electrolyte disposed between the anode and the cathode; and a separator disposed between the anode and the cathode to prevent electrical short of the anode and the cathode.

In one embodiment, each of the cathode and the anode may be manufactured by depositing a mixture comprising an active material, a conductive material and a binder on one surface of an electrode plate (electricity collector), followed by drying and pressing the mixture.

In one embodiment, each of a cathode plate and an anode plate may include at least one of copper, stainless steel, aluminum, nickel, and titanium.

In another example, the anode plate may be nickel foam, copper foam, a metal coated polyimide film, or a combination thereof.

In another example, the anode plate may include a copper foil, a carbon-coated copper foil, a copper foil having a surface roughness of 5 nm or more, a nickel foil, a stainless steel foil, a nickel-coated iron (Fe) foil, and a copper foil formed with holes having a size of 1 $\mu$m to 50 $\mu$m.

In one embodiment, the cathode material may include a composite oxide of a metal and lithium. The metal may include at least one of cobalt (Co), manganese (Mn), aluminum (Al), and nickel (Ni). For example, the metal may include at least one of lithium-nickel oxide, lithium-nickel-cobalt oxide, lithium-nickel-cobalt-manganese oxide, and lithium-nickel-cobalt-aluminum oxide.

In one embodiment, the conductive material may include at least one of natural graphite, artificial graphite, carbon black, acetylene black, Ketjen black, channel black, carbon fiber, metal fiber, carbon fluoride, aluminum, nickel powder, zinc oxide, potassium titanate, titanium oxide, and polyphenylene compounds.

In one embodiment, the binder may include polyvinylidene fluoride, polyvinyl alcohol, carboxymethylcellulose (CMC), starch, hydroxypropylcellulose, polyvinyl pyrrolidone, polytetrafluoroethylene, polyethylene, polypropylene, ethylene-propylene-diene monomer (EPDM), styrene rubber, and fluorine rubber.

In one embodiment, the separator may be a typical separator. For example, the separator may include at least one of polyester, polyethylene, polypropylene, and polytetrafluoroethylene (PTFE). The separator may be realized in the form of non-woven fabrics or woven fabrics. The separator is a porous structure having an average pore diameter of 0.01 $\mu$m to 10 $\mu$m and a thickness of 5 $\mu$m to 500 $\mu$m.

In one embodiment, the electrolyte may include a non-aqueous organic solvent and a lithium salt. For example, the non-aqueous organic solvent may include at least one of a carbonate solvent, an ester solvent, an ether solvent, and a ketone solvent. The carbonate solvent may include at least one of vinylene carbonate (VC), dimethyl carbonate (DMC), diethyl carbonate (DEC), dipropyl carbonate (DPC), fluoroethylene carbonate (FEC), methyl propyl carbonate (MPC), ethyl methyl carbonate (EMC), ethyl propyl carbonate (EPC), ethylene carbonate (EC), propylene carbonate (PC), and butylene carbonate (BC).

The ester solvent may include at least one of butyrolactone, decanolide, valerolactone, caprolactone, n-methyl acetate, n-ethyl acetate, and n-propyl acetate. The ether solvent may include dibutyl ether and the like. The ketone solvent may include poly(methyl vinyl ketone).

The lithium salt may act as a source of lithium ions in a battery. For example, the lithium salt may include at least one of $LiPF_6$, $LiBF_4$, $LiSbF_6$, $LiAsF_6$, $LiClO_4$, $LiCF_3SO_3$, $LiN(CF_3SO_2)_2$, $LiN(C_2F_5SO_2)_2$, $LiAlO_4$, and $LiAlCl_4$, without being limited thereto.

In one embodiment, the electrolyte may include at least one of vinylene carbonate, vinyl ethylene carbonate, monofluoroethylene carbonate, difluoroethylene carbonate, succinic anhydride, and 1,3-propane sultone.

In one embodiment, the lithium secondary battery may include a prismatic battery, a cylindrical battery, and a pouch-type battery.

Next, the present invention will be described in more detail with reference to examples. However, it should be understood that these examples are provided for illustration only and should not be construed in any way as limiting the invention.

**Examples and Comparative Example**

**Example 1**

(1) Preparation of nano-silicon slurry and dried powder: Silicon powder having an average particle diameter (d50) of 0.5 μm was prepared. A dispersion comprising 100 parts by weight of the silicon powder, 0.1 parts by weight of a dispersant (stearic acid) and 900 parts by weight of a first solvent (ethanol) was prepared and ground by milling to prepare a nano-silicon slurry (viscosity: 4,320 cP at 25°C) comprising nano-silicon particles having an average particle diameter (d50) of 200 nm (radius: 100 nm). Then, dried powder was prepared by drying the nano-silicon slurry using a rotational spray dryer at a disc RPM of 20,000 rpm to 30,000 rpm.

(2) Preparation of first intermediate material: A first intermediate material was prepared by mixing the prepared dried powder with a first coating material (hard coating material having an average particle diameter (d50) of 0.01 μm to 0.5 μm and a pencil hardness of 4H to 6H in accordance with ISO 15184, NanoMollisAdamas, Lemon Energy Co., Ltd.), followed by sintering at 900°C to 1,050°C in an inert gas atmosphere.

(3) Preparation of second intermediate material and anode material: A first coating layer (soft coating layer) was formed by mixing the first intermediate material with a soft coating material (including pitch having an average particle diameter (d50) of 3 μm to 5 μm) as a second coating material, followed by sintering at 850°C to 975°C, thereby forming a second intermediate material (anode material). Then, an anode material was prepared by crushing and classifying the second intermediate material.

The anode material included: a hollow core (thickness: 20 nm to 30 nm, pencil hardness: 4H to 6H in accordance with ISO 15184, density: 1.8 g/cm³ to 2.1 g/cm³) having a hollow portion therein, nano-silicon particles and nano-carbon particles (nano-carbon particles having an average particle diameter (d50) of 30 nm to 50 nm, a pencil hardness of 4H to 6H in accordance with ISO 15184, and a density of 1.8 g/cm³ to 2.1 g/cm³) packed in the hollow portion, and a first coating layer (soft coating layer having a thickness of 10 nm to 20 nm, a pencil hardness of B in accordance with ISO 15184, and a density of 1.5 g/cm³) on the outer circumferential surface of the hollow core, in which the hollow portion had a radius (R) of 3 μm (an average particle diameter of 6 μm).

The anode material included 25 wt% to 80 wt% of the nano-silicon particles, 1 wt% to 20 wt% of the nano-carbon particles, 1 wt% to 40 wt% of the hollow core, and 1 wt% to 40 wt% of the first coating layer. Here, the first coating layer and the hollow core were present in a weight ratio of 1:0.5 to 1:2.

**Example 2**

An anode material was prepared in the same manner as in Example 1 except that nano-silicon particles having an average particle diameter (d50) of 300 nm (radius: 150 nm) were used.

In Examples 1 and 2, the number of nano-silicon particles packed in the hollow portion ($n_1$) satisfied the conditions of Formula 1a.

[Formula 1a]

$$n_1 \leq \frac{0.7405\, q_1^3 + 0.484(1 - q_1^3)}{d_1^3},$$

where $d_1$ denotes a relative diameter of the expanded nano-silicon particles, as calculated according to Formula 1-1a, and $q_1$ denotes a relative diameter of the expanded nano-silicon particles at the center of the hollow portion, as calculated according to Formula 1-2a.

[Formula 1-1a]

$$d_1 = r'/R,$$

where R denotes the radius of the hollow portion and r' denotes the radius of the expanded nano-silicon particles, r' = 1.5874*r (r being the radius of the nano-silicon particles).

[Formula 1-2a]

$$q_1 = 1-2*d_1,$$

where d is the same as defined above.

In Examples 1 and 2, the maximum number of nano-silicon particles capable of being packed in the hollow portion ($n_0$) satisfied the conditions of Formula 1-3.

[Formula 1-3]

$$n_0 = \frac{0.7405\, q_0^3 + 0.484(1 - q_0^3)}{d_0^3},$$

where $d_0$ denotes a relative diameter of the nano-silicon particles, as calculated according to Formula 1-4, and $q_0$ denotes a relative diameter of the nano-silicon particles at the center of the hollow portion, as calculated according to Formula 1-5.

[Formula 1-4]

$$d_0 = r/R,$$

where R is the radius of the hollow portion and r is the radius of the nano-silicon particles.

[Formula 1-5]

$$q_0 = 1-2*d_0,$$

where $d_0$ is the same as defined above.

From Formulas 1a, 1-1a, 1-2a, 1-3, 1-4 and 1-5, the radius (R) of the hollow portion of the hollow core, the radii (r, r') and the relative diameters ($d_0$, $d_1$) of the nano-silicon particles/expanded nano-silicon particles prepared in Examples 1 to 2, and the relative diameters ($d_0$, $d_1$) of the nano-silicon particles/expanded nano-silicon particles at the center of the hollow portion were deduced and represented in Table 1.

[Table 1]

| Item | Item | R (μm) | r,r' (nm) | $d_0$,$d_1$ (nm) | $n_0$,$n_1$ (number) | $q_0$,$q_1$ (nm) |
|---|---|---|---|---|---|---|
| Nano-silicon particles | Example 1 | 3 | 100 | 0.0333 | 19265 | 0.9333 |
| | Example 2 | | 150 | 0.0500 | 5368 | 0.9000 |
| Expanded nano-silicon particles (expanded 4 times in volume) | Example 1 | 3 | 158 | 0.0527 | 4562 | 0.8947 |
| | Example 2 | | 238 | 0.0793 | 1277 | 0.8413 |

Referring to Table 1, in Examples 1 and 2, the maximum numbers of nano-silicon particles having a radius of 100 nm and a radius of 150 nm and capable of being packed in the hollow portion having a radius of 3 μm were 19,265 and 5,368, respectively. Further, in Examples 1 and 2, it could be seen that the expanded nano-silicon particles expanded 4 times in volume had a radius of 158 nm and a radius of 238 nm and were packed up to 4,562 and 1,277 in the hollow portion, respectively. Accordingly, it could be seen that the number of nano-silicon particles packed in the hollow portion should be restricted to 4,562 (or 1,277) or less in order to prevent fracture of the hollow core upon expansion of the nano-silicon particles having a radius of 100 nm (or 150 nm) due to intercalation of lithium ions thereinto.

Further, in Example 1 and Example 2, the packing densities were measured to be 23.7% and 23.8%, as calculated according to Formula 3.

[Formula 3]

$$\text{Packing density} = (n_1/n_0) * 100,$$

where $n_0$ denotes the maximum number of nano-silicon particles capable of being packed in the hollow portion, as calculated by Formula 1-3 and $n_1$ denotes the number of nano-silicon particles packed in the hollow portion, as calculated by Formula 1.

**Example 3**

An anode material was prepared in the same manner as in Example 1 except that first nano-silicon particles having an average particle diameter (d50) of 200 nm (radius: 100 nm) and second nano-silicon particles having an average particle diameter (d50) of 300 nm (radius: 150 nm) were used as the nano-silicon particles.

In Example 3, the numbers of the first and second nano-silicon particles ($n_1$, $n_2$) packed in the hollow portion having a radius R satisfied Formula 2.

[Formula 2]

$$n_1 \left(\frac{r_1'}{R}\right)^3 + n_2 \left(\frac{r_2'}{R}\right)^3 \leq 1$$

,

where $r_1'$ denotes the radius of the first expanded nano-silicon particles, $r_2'$ denotes the radius of the second expanded nano-silicon particles, and R is the radius of the hollow portion, $r_1'$ and $r_2'$ being $1.5874*r_1$ and $1.5874*r_2$, respectively.

That is, when substituting the radii of the first nano-silicon particles and the second nano-silicon particles and the radius of the hollow portion into Formula 2, the relation: $3.944*n_1 + 13.481*n_2 \leq 27000$ is obtained and the relation: $n_1 + 3.418*n_2 \leq 6845.842$ must be satisfied.

On the other hand, in order to deduce the numbers of first and second nano-silicon particles used in Example 3, parameters obtained by substituting the numbers ($n_1$, $n_2$) of first and second nano-silicon particles according to the total volume ratio (binary ratio) of each of the first and second nano-silicon particles ($S_1$, $S_2$) packed in the hollow portion into Formula 2 and the numbers of first and second nano-silicon particles are shown in Table 2.

In Table 2, PNR denotes a packing number ratio corresponding to a theoretic packing density and was obtained according to the following formula:

$$\text{PNR} = n_1*(r_1'/R)^3 + n_2*(r_2'/R)^3,$$

where R is the radius of the hollow portion.

[Table 2]

| Total volume ratio | | The number of particles | | Total number of particles | Formula 2 | PNR |
|---|---|---|---|---|---|---|
| $S_1$ | $S_2$ | $n_1$ | $n_2$ | $n_1+n_2$ | $n_1+3.418*n_2$ | |
| 100 | - | 4570 | - | 4570 | 4570 | 0.668 |
| 90 | 10 | 4113 | 128 | 4241 | 4549 | 0.664 |
| 80 | 20 | 3656 | 255 | 3911 | 4528 | 0.660 |
| 70 | 30 | 3199 | 383 | 3582 | 4506 | 0.656 |
| 60 | 40 | 2742 | 510 | 3252 | 4485 | 0.652 |
| 50 | 50 | 2285 | 638 | 2923 | 4464 | 0.648 |
| 40 | 60 | 1828 | 765 | 2593 | 4443 | 0.644 |
| 30 | 70 | 1371 | 893 | 2264 | 4422 | 0.640 |
| 20 | 80 | 914 | 1020 | 1934 | 4400 | 0.636 |
| 10 | 90 | 457 | 1148 | 1605 | 4379 | 0.633 |
| - | 100 | - | 1275 | 1275 | 4358 | 0.629 |

Referring to Table 2, it could be seen that, when the first hollow portion was packed with 457 to 4,113 first nano-silicon particles having a radius of 100 nm and 128 to 1,020 second nano-silicon particles having a radius of 150 nm in Example 3, the first hollow portion did not suffer from cracking or fracture even upon expansion of the nano-silicon particles to four times in volume. In Example 3, the first hollow portion was packed with 2,285 first nano-silicon particles and 638 second nano-silicon particles.

**Example 4**

(1) Preparation of nano-silicon slurry and dried powder: A dispersion comprising 100 parts by weight of silicon powder, 0.1 parts by weight of a dispersant (stearic acid) and 900 parts by weight of a first solvent (ethanol) was prepared and ground by milling to prepare a nano-silicon slurry (viscosity: 4,320 cP at 25°C) comprising nano-silicon particles having an average particle diameter (d50) of 200 nm (radius: 100 nm). Then, dried powder was prepared by drying the nano-silicon slurry using a rotational spray dryer at a disc rpm of 20,000 rpm to 30,000 rpm.
(2) Preparation of first intermediate material: A first intermediate material was prepared by mixing the prepared dried powder with a soft coating material (comprising pitch having an average particle diameter (d50) of 0.01 $\mu$m to 0.5 $\mu$m and a pencil hardness of B to 1H in accordance with ISO 15184), followed by sintering at 850°C to 975°C.
(3) Preparation of second intermediate material and anode material: A second mixture including the first intermediate material and a hard coating material (a carbon material having an average particle diameter (d50) of 0.01 $\mu$m to 0.5 $\mu$m and a pencil hardness of 4H to 6H in accordance with ISO 15184, NanoMollisAdamas, Lemon Energy Co., Ltd.) as a second coating material was sintered at 900°C to 1,050°C, thereby preparing a second intermediate material. Then, an anode material was prepared by crushing and classifying the second intermediate material.

The anode material included: a hollow core (thickness: 20 nm to 30 nm, pencil hardness: B in accordance with ISO 15184, density: 1.5 g/cm$^3$) having a hollow portion therein, nano-silicon particles and nano-carbon particles (including second nano-carbon particles having an average particle diameter (d50) of 10 nm to 30 nm, a pencil hardness of B to 1H in accordance with ISO 15184, and a density of 0.5 g/cm$^3$ to 1.5 g/cm$^3$) packed in the hollow portion, and a first coating layer (including a hard coating layer having a thickness of 10 nm to 30 nm, a pencil hardness of 4H to 6H in accordance with ISO 15184, and a density of 1.8 g/cm$^3$ to 2.1 g/cm$^3$) on the outer circumferential surface of the hollow core, in which the hollow portion had a radius (R) of 3 $\mu$m (an average particle diameter of 6 $\mu$m)

The anode material included 25 wt% to 80 wt% of the nano-silicon particles, 1 wt% to 20 wt% of the nano-carbon particles, 1 wt% to 40 wt% of the hollow core, and 1 wt% to 40 wt% of the first coating layer. Here, the first coating layer and the hollow core were present in a weight ratio of 1:0.5 to 1:2.

## Example 5

An anode material was prepared in the same manner as in Example 1 except that a second coating layer (hard coating layer) was formed by mixing the second intermediate material with a hard coating material (average particle diameter (d50): 0.01 $\mu$m to 0.5 $\mu$m, pencil hardness: 4H to 6H in accordance with ISO 15184, NanoMollisAdamas, Lemon Energy Co., Ltd.) as a third coating material, followed by sintering at 900°C to 1,050°C in an inert gas atmosphere.

The anode material included: a hollow core (thickness: 20 nm to 30 nm, pencil hardness: 4H to 6H in accordance with ISO 15184, density: 1.8 g/cm$^3$ to 2.1 g/cm$^3$) having a hollow portion therein, nano-silicon particles and nano-carbon particles (including first nano-carbon particles having an average particle diameter (d50) of 30 nm to 50 nm, a pencil hardness of 4H to 6H in accordance with ISO 15184, and a density of 1.8 g/cm$^3$ to 2.1 g/cm$^3$) packed in the hollow portion, a first coating layer (soft coating layer having a thickness of 10 nm to 20 nm, a pencil hardness of B in accordance with ISO 15184, and a density of 1.5 g/cm$^3$) formed on the outer circumferential surface of the hollow core, and a second coating layer (hard coating layer having a thickness of 10 nm to 20 nm, a pencil hardness of 4H to 6H in accordance with ISO 15184, and a density of 1.8 g/cm$^3$ to 2.1 g/cm$^3$) formed on the outer circumferential surface of the first coating layer, in which the hollow portion had a radius (R) of 3 $\mu$m (average diameter: 6 $\mu$m).

The anode material included 25 wt% to 80 wt% of the nano-silicon particles, 1 wt% to 10 wt% of the nano-carbon particles, 1 wt% to 30 wt% of the hollow core, and 1 wt% to 20 wt% of the first coating layer (soft coating layer), and 1 wt% to 20 wt% of the second coating layer (hard coating layer). Here, the first coating layer and the hollow core were present in a weight ratio of 1:0.5 to 1:2, and the first coating layer and the second coating layer were present in a weight ratio of 1:1 to 1:2.

## Example 6

An anode material was prepared in the same manner as in Example 4 except that a second coating layer (soft coating layer) was formed on the outer circumferential surface of the first coating layer by mixing the second intermediate material with a soft coating material (including pitch having an average particle diameter (d50) of 0.01 $\mu$m to 0.5 $\mu$m and a pencil hardness of B to 1H in accordance with ISO 15184) as a third coating material, followed by sintering at 850°C to 975°C.

The anode material included: a hollow core (thickness: 20 nm to 30 nm, pencil hardness: B in accordance with ISO 15184, density: 1.5 g/cm$^3$) having a hollow portion therein, nano-silicon particles and nano-carbon particles (including second nano-carbon particles having an average particle diameter (d50) of 10 nm to 30 nm, a pencil hardness of B to 1H in accordance with ISO 15184, and a density of 0.5 g/cm$^3$ to 1.5 g/cm$^3$) packed in the hollow portion, a first coating layer formed on the outer circumferential surface of the hollow core, and a second coating layer formed on the outer circumferential surface of the first coating layer, in which the first coating layer included a hard coating layer (thickness: 10 nm to 30 nm, pencil hardness: 4H to 6H in accordance with ISO 15184, density: 1.8 g/cm$^3$ to 2.1 g/cm$^3$), the second coating layer included a soft coating layer (thickness: 10 to 20 nm, pencil hardness: B in accordance with ISO 15184, density: 1.4 g/cm$^3$), and the hollow portion had a radius (R) of 3 $\mu$m (average diameter: 6 $\mu$m).

The anode material included 25 wt% to 80 wt% of the nano-silicon particles, 1 wt% to 30 wt% of the hollow core, 1 wt% to 10 wt% of the nano-carbon particles, 1 wt% to 30 wt% of the first coating layer (hard coating layer), and 1 wt% to 30 wt% of the second coating layer (soft coating layer), in which the first coating layer and the hollow core were present in a weight ratio of 1:0.5 to 1:2, and the first coating layer and the second coating layer were present in a weight ratio of 1:1 to 1:2.

## Example 7

A second coating layer (including a hard coating layer and a medium coating layer) was formed on the second intermediate material prepared in Example 1. Specifically, a hard coating layer was formed on the outer circumferential surface of the second intermediate material by mixing the second intermediate material of Example 1 with a hard coating material (carbon material having an average particle diameter (d50) of 0.01 $\mu$m to 0.5 $\mu$m and a pencil hardness of 4H to 6H in accordance with ISO 15184, NanoMollisAdamas, Lemon Energy Co., Ltd.) as a second coating material, followed by sintering at 900°C to 1,050°C in an inert gas atmosphere.

Then, an anode material was prepared by placing the second intermediate material having the hard coating layer thereon in the chamber, followed by heat treatment at 900°C while supplying hydrocarbon gas (CH$_4$) as a third coating material at a flow rate of 0.2 L/cc to the chamber in a vacuum of 10$^{-1}$ torr to 10$^{-6}$ torr for 20 min to form a medium coating layer on the outer circumferential surface of the hard coating layer through pyrolysis of the hydrocarbon gas.

The anode material included: a hollow core (thickness: 20 nm to 30 nm, pencil hardness: 4H to 6H in accordance with ISO 15184, density: 1.8 g/cm$^3$ to 2.1 g/cm$^3$) having a hollow portion therein, nano-silicon particles and nano-carbon particles (including first nano-carbon particles having an average particle diameter (d50) of 30 nm to 50 nm, a pencil hardness of 4H to 6H in accordance with ISO 15184, and a density of $1.8 \, g/cm^3$ to $2.1 \, g/cm^3$) packed in the hollow portion, a first coating layer (including a soft coating layer -thickness: 10 to 20 nm, pencil hardness: B in accordance with ISO 15184, density: $1.4 \, g/cm^3$) formed on the outer circumferential surface of the hollow core, and a second coating layer (including a hard coating layer (thickness: 10 nm to 20 nm, pencil hardness: 4H to 6H in accordance with ISO 15184, density: $1.8 \, g/cm^3$ to $2.1 \, g/cm^3$) and a medium coating layer (thickness: 5 nm to 20 nm, pencil hardness: 2H to 3H in accordance with ISO 15184, density: $1.5 \, g/cm^3$ to $1.7 \, g/cm^3$) sequentially formed) on the outer circumferential surface of the first coating layer, in which the hollow portion had a radius (R) of 3 $\mu$m (average diameter: 6 $\mu$m).

The anode material included 25 wt% to 80 wt% of the nano-silicon particles, 1 wt% to 10 wt% of the nano-carbon particles, 1 wt% to 30 wt% of the hollow core, 1 wt% to 20 wt% of the first coating layer (soft coating layer), and the second coating layer (1 wt% to 10 wt% of the hard coating layer and 1 wt% to 10 wt% of the medium coating layer), in which the first coating layer (soft coating layer) and the hollow core were present in an amount of 1:0.5 to 1:2, and the soft coating layer, the hard coating layer and the medium coating layer were present in an amount of 1:1 to 2:1 to 3.

## Example 8

A soft coating layer was formed on the outer circumferential surface of the first coating layer by mixing the second intermediate material prepared in Example 4 with a soft coating material (including pitch having an average particle diameter (d50) of 0.01 $\mu$m to 0.5 $\mu$m and a pencil hardness of B to 1H in accordance with ISO 15184) as a third coating material, followed by sintering at 850°C to 975°C.

Then, an anode material was prepared by placing the second intermediate material having the soft coating layer thereon in the chamber, followed by heat treatment at 900°C while supplying hydrocarbon gas ($CH_4$) as a third coating material at a flow rate of 0.2 L/cc to the chamber in a vacuum of $10^{-2}$ torr to $10^{-6}$ torr for 20 min to form a medium coating layer on the outer circumferential surface of the soft coating layer through pyrolysis of the hydrocarbon gas.

The anode material included: a hollow core (thickness: 20 nm to 30 nm, pencil hardness: B in accordance with ISO 15184, density: $1.5 \, g/cm^3$) having a hollow portion therein, nano-silicon particles (average particle diameter (d50): 200 mn (radius: 100 nm)) and nano-carbon particles (including second nano-carbon particles having an average particle diameter (d50) of 10 nm to 30 nm, a pencil hardness of B to 1H in accordance with ISO 15184, and a density of $0.5 \, g/cm^3$ to $1.5 \, g/cm^3$) packed in the hollow portion, a first coating layer formed on the outer circumferential surface of the hollow core, and a second coating layer (including a soft coating layer and a medium coating layer sequentially formed) on the outer circumferential surface of the first coating layer.

The first coating layer included a hard coating layer (thickness: 10 nm to 30 nm, pencil hardness: 4H to 6H in accordance with ISO 15184, density: $1.8 \, g/cm^3$ to $2.1 \, g/cm^3$), and the second coating layer included a soft coating layer (thickness: 10 nm to 20 nm, pencil hardness: B in accordance with ISO 15184, density: $1.4 \, g/cm^3$) and a medium coating layer (thickness: 5 nm to 20 nm, pencil hardness: 2H to 3H in accordance with ISO 15184, density: $1.5 \, g/cm^3$ to $1.7 \, g/cm^3$) sequentially formed on the outer circumferential surface of the first coating layer, in which the hollow portion had a radius (R) of 3 $\mu$m (average diameter: 6 $\mu$m).

The anode material included 25 wt% to 80 wt% of the nano-silicon particles, 1 wt% to 30 wt% of the hollow core, 1 wt% to 10 wt% of the nano-carbon particles, 1 wt% to 30 wt% of the first coating layer (hard coating layer), and 2 wt% to 20 wt% of the second coating layer (1 wt% to 10 wt% of the soft coating layer and 1 wt% to 10 wt% of the medium coating layer), in which the first coating layer (hard coating layer) and the hollow core were present in an amount of 1: 1 to 1:2, and the hard coating layer, the soft coating layer and the medium coating layer were present in an amount of 1: 1 to 2:1 to 2.

## Comparative Example 1

Sintered powder was prepared by sintering the dried powder prepared in Example 1 at 900°C to 1,050°C in an inert gas atmosphere. Thereafter, an anode material (intermediate material) was prepared by mixing the sintered powder with a soft coating material (including pitch having an average particle diameter (d50) of 3 $\mu$m to 5 $\mu$m), followed by sintering at 850°C to 975°C to form a first coating layer (soft coating layer), and was crushed and classified.

The anode material included a core including nano-silicon particles and a first coating layer (soft coating layer having a thickness: 10 nm to 20 nm, a pencil hardness of B in accordance with ISO 15184, and a density of $1.5 \, g/cm^3$) on an outer circumferential surface of the core.

The anode material included 25 wt% to 80 wt% of the nano-silicon particles and 20 wt% to 75 wt% of the first coating layer.

## Experimental Example

(1) Measurement of grain size at (111), oxidation rate, and specific surface area of nano-silicon particles: The anode materials prepared in Examples and Comparative Example were measured as to the grain size at the (111) plane, oxidation rate, and specific surface area of the nano-silicon particles. Specifically, the grain size of the nano-silicon particles prepared in Examples and Comparative Example was calculated according to a gain size equation (Scherrer Equation for K=9) based on the FWHM (full width at half maximum) values at the (111) plane in X-ray diffraction analysis using CuK$\alpha$-rays. The oxidation rate of the nano-silicon particles was calculated based on the content of oxygen measured using a measurement instrument (ONH 836 Series, LECO) and the specific surface area thereof was measured using a BET meter (Micromeritics, Tristar II 3920). Table 3 shows measurement results.

[Table 3]

| Item | Grain size (nm) at (111) | Oxygen content (wt%) | Specific surface area (m$^2$/g) |
|---|---|---|---|
| Example 1 | 16.9 | 6.5 | 6.7 |
| Example 2 | 16.7 | 6.6 | 8.2 |
| Example 3 | 16.5 | 6.2 | 7.8 |
| Example 4 | 16.8 | 6.4 | 7.4 |
| Example 5 | 16.3 | 6.6 | 6.3 |
| Example 6 | 17.1 | 6.1 | 6.8 |
| Example 7 | 16.8 | 5.9 | 6.4 |
| Example 8 | 16.9 | 5.9 | 6.8 |
| Comparative Example 1 | 15.7 | 9.6 | 6.1 |

Referring to Table 3, it could be seen that the anode materials of Examples 1 to 8 had a lower oxidation rate to provide better properties in terms of high output and long lifespan than the anode material of Comparative Example 1.

In addition, for the nano-silicon particles, it is desirable to have a smaller grain size in order to allow reversible physical expansion and contraction thereof upon intercalation and deintercalation of lithium ions (a smaller grain size of the silicon particles results in a greater half-width of the main peak in the Si [111] orientation in the 2$\theta$ data of XRD and a smaller grain size calculated according to the Scherrer equation for K=9). However, a smaller grain size of the silicon particles can cause increase in oxidation rate of silicon through increase in grinding time of a silicon material. Therefore, it is important to control the oxidation rate of the nano-silicon particles through determination of the size of the silicon particles and production of the silicon particles having a suitable grain size.

That is, according to the present invention, the average particle diameter (d50) of the nano-silicon particles is set to satisfy the oxidation rate of a silicon anode. In this case, expansion/contraction of the nano-silicon particles becomes reversible. Accordingly, it is possible to secure stable electrochemical characteristics in evaluation of lithium ion secondary batteries using the anode materials of Examples.

The nano-silicon particles may have an FWHM value of the X-ray diffraction angle (2$\theta$) of 0.40° to 0.80°, preferably 0.52° to 0.68°, or 0.59° to 0.71°, at the (111) plane in X-ray diffraction analysis using CuK$\alpha$-rays.

When the FWHM value of the nano-silicon particles satisfies the above range after sintering, fracture of the silicon particles can be significantly reduced upon charging/discharging by sufficiently suppressing new exposed surfaces of the nano-silicon particles. However, the anode materials of Examples allowed efficient charging/discharging, thereby significantly improving lifespan of the silicon anodes. Further, it can be seen that a high capacity silicon anode, that is, an anode material for lithium ion secondary batteries, can be produced using the nano-silicon particles such that capacity of a silicon/carbon composite exceeds the range of 1,300 mAh/g to 1,400 mAh/g.

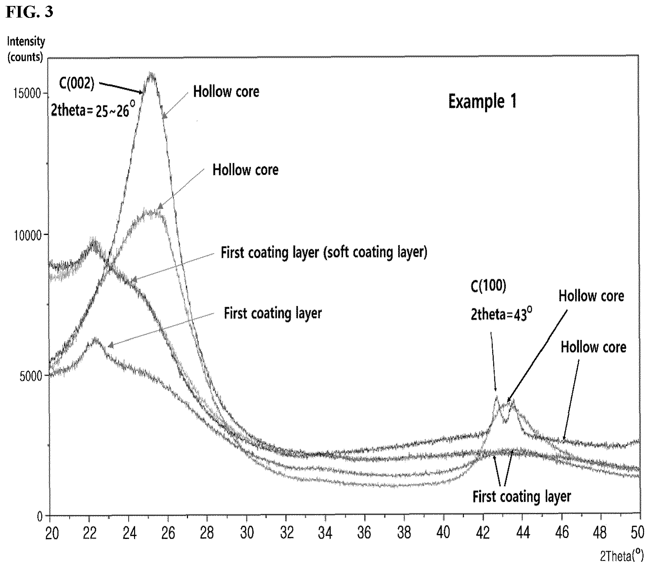

(2) Anode material XRD peak analysis: Among the anode materials of Examples and Comparative Example, the hollow core and the first coating layer (soft coating layer) of the anode material of Example 1 were analyzed based on XRD peaks. FIG. 3 shows an analysis result.

FIG. 3 is an XRD graph depicting an XRD analysis result of the hollow core and the soft coating layer (the first coating layer) of the anode material of Example 1. Referring to FIG. 3, in the XRD graph, the hollow core of Example 1 had a primary peak at 2$\theta$ = about 25° to 26° at the C(002) plane, whereas the first coating layer of Example 1 had a primary peak near at 2$\theta$ = 23° substantially indicating graphite. Accordingly, it could be seen that the hollow core had better crystallinity than the first coating layer (soft coating layer).

Referring again to FIG. 3, the secondary peak appeared near at 2$\theta$ = 43° at the C(100) plane and the hollow core had higher crystallinity than the first coating layer. Accordingly, it could be seen that the hollow core with high crystallinity had higher hardness, better stiffness, and higher electrical conductivity of carbon than the first coating layer.

(3) Electrochemical evaluation (1)

(3-1) Preparation of lithium ion battery (half-coin type cell): CR2032 half-coin cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubber (SBR). Next, an anode slurry having a capacity of about 450 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector, followed by drying and pressing. The anode had a loading quantity of $6.5 \pm 0.5$ mg/cm$^2$ and an electrode density of 1.60 g/cc to 1.65 g/cc.

A CR2032 half-coin cell was prepared using a lithium cathode (thickness: 300 $\mu$m, MTI), an electrolyte, and a separator (including polypropylene and polyethylene) by a typical method. The electrolyte was prepared by dissolving 1M LiPF$_6$ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (94.5 wt% of the solvent mixture, 0.5 wt% of vinylene carbonate and 5 wt% of fluoroethylene carbonate).

(3-2) Evaluation of charge/discharge characteristics: The half-coin cells prepared in (3-1) were subjected to aging at room temperature (25°C) for 20 hours, followed by electrochemical evaluation. For the anode materials, a reference capacity was set to 450 mAh/g and a measurement temperature was set to 45°C. A single cycle of a precharging process was performed in the operation voltage range of 0.005V to 1.5V, in which the charge/discharge current was 0.1C for one cycle. Then, after two cycles at a capacity of 0.2C, 120 cycles of lifespan evaluation were performed by applying a current of 0.5C upon charging/discharging at 0.2C in two cycles. Here, charge cut-off current was set to 0.005C and discharge cut-off voltage was set to 1.0V.

Lifespan (%) of the secondary batteries was evaluated through electrochemical evaluation of capacity (mAh/g) of the anodes of Examples and Comparative Example, and capacity (mAh/g), charge/discharge efficiency (%) and capacity retention rate of anode plates. Table 4 shows evaluation results.

(3-3) Evaluation of expansion characteristics: An expansion rate of the anode material upon charging/discharging was evaluated with respect to each of the half-coin cells of Examples and Comparative Example prepared in (3-1). Evaluation of the expansion rate was performed with reference to an initial anode thickness of the half-coin cell. The half-coin cell was charged with a current of 0.5C after 50 cycles of charging/discharging at a current of 0.5C. Next, the thickness of the anode and the thickness increase rate with reference to the initial anode thickness were measured. Table 4 shows a measurement result.

The thickness of the anode was measured using a measuring device (micrometer) after completion of the cycles, followed by dissembling the half-coin cell and completely removing foreign matter including a salt therefrom using a solvent (DMC).

[Table 4]

| Item | Capacity (mAh/g) | Capacity of anode plate (mAh/g) | Charge/discharge efficiency (%) | Lifespan (%) @120cycle | Expansion rate (%) @50cycle |
|---|---|---|---|---|---|
| Example 1 | 1637 | 455 | 90.5 | 90 | 51.3 |
| Example 2 | 1674 | 447 | 90.7 | 91 | 49.5 |
| Example 3 | 1634 | 452 | 89.8 | 91 | 45.6 |
| Example 4 | 1589 | 453 | 90.1 | 91 | 52.3 |
| Example 5 | 1648 | 443 | 89.8 | 84 | 58.8 |
| Example 6 | 1682 | 966 | 88.6 | 87 | 43.4 |
| Example 7 | 1691 | 973 | 91.1 | 90 | 42.1 |
| Example 8 | 1689 | 975 | 90.2 | 89 | 42.5 |
| Comparative Example 1 | 1675 | 895 | 86.6 | 65.5 | 68.5 |

Referring to Table 4, it could be seen that the anode materials of Examples 1 to 8 had better properties in terms of charge/discharge efficiency and long lifespan than Comparative Example 1. In addition, it could be seen that the anode materials of Examples 1 to 8 had a lower volume change rate upon charging/discharging than Comparative Example 1, thereby preventing cracking and fracture upon intercalation/deintercalation of lithium ions and securing long lifespan through minimization in capacity reduction.

(4) Electrochemical evaluation (2)

(4-1) Preparation of lithium ion battery (1.0 Ah pouch type full cell): Pouch type full cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubbers (SBR). Next, an anode slurry having a capacity of about 550 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector plate, followed by drying and pressing. The anode had a loading quantity of 6.5±0.5m g/cm$^2$ and an electrode density of 1.55 g/cc to 1.60 g/cc.

Next, pouch cells having a capacity of 1.0 Ah were prepared using a cathode (NCM622), an electrolyte, and a separator (including polypropylene and polyethylene) by a typical method.

The electrolyte was prepared by dissolving 1M LiPF$_6$ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (96.5 wt% of the solvent mixture, 0.5 wt% of vinylene carbonate and 3 wt% of fluoroethylene carbonate).

(4-2) Evaluation of charge/discharge characteristics: The full cells prepared in (4-1) were subjected to aging at room temperature (25°C) for 20 hours or more, followed by electrochemical evaluation at room temperature. Specifically, for each of the full cells prepared in Examples and Comparative Example, a single cycle of a precharging process of 0.1C charge/0.1C discharge was performed in the operation voltage range of 2.75V to 4.25V. In one cycle, the charge current was set to 0.1C and the cut-off current was set to 0.005C. Then, after two cycles with reference to a standard process of 0.2C charge, 0.01C cut-off/0.1C discharge, 300 cycles of lifespan evaluation (capacity retention rate) were performed under conditions of 1.0C/4.2V cutoff by applying a charge current of 0.5C/0.02C cut-off upon charging with reference to 0.2C discharge capacity in two cycles. Table 5 shows evaluation results.

[Table 5]

| Item | One cycle charge/discharge efficiency (0.1C/0.1C) | Capacity retention rate @300cycle |
|---|---|---|
| Example 1 | 85.6 | 93.6 |
| Example 2 | 85.4 | 93.1 |
| Example 3 | 85.2 | 92.9 |
| Example 4 | 85.5 | 93.8 |
| Example 5 | 85.1 | 92.5 |
| Example 6 | 86.3 | 94.4 |
| Example 7 | 87.3 | 95.6 |
| Example 8 | 87.1 | 95.5 |
| Comparative Example 1 | 85.8 | 79.3 |

From the result of Table 5, it could be seen that the full cells of Examples 1 to 8 had better properties in terms of charge/discharge efficiency and long lifespan characteristics than that of Comparative Example 1.

Although the present invention has been described with reference to some example embodiments, it should be understood by those skilled in the art that these embodiments are given by way of illustration only, and that various modifications, variations and alterations can be made without departing from the spirit and scope of the invention. Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

**Claims**

1.  An anode material comprising:

a hollow core having a hollow portion therein;
nano-silicon particles packed in the hollow portion; and
a first coating layer formed on an outer circumferential surface of the hollow core,
wherein the first coating layer comprises a hard coating layer, a medium coating layer or a soft coating layer,
the hard coating layer having a higher hardness than the medium coating layer,
the medium coating layer having a higher hardness than the soft coating layer,
the hollow core and the first coating layer having different hardnesses.

2. The anode material according to claim 1, further comprising: nano-carbon particles dispersed between the nano-silicon particles.

3. The anode material according to claim 1, wherein the number of nano-silicon particles packed in the hollow portion is set such that a total volume of expanded nano-silicon particles formed by intercalation of lithium ions into the nano-silicon particles is equal to or less than a volume of the hollow portion.

4. The anode material according to claim 3, wherein the number (n) of nano-silicon particles packed in the hollow portion satisfies Formula 1.

[Formula 1]

$$n \leq \frac{0.7405\, q^3 + 0.484(1 - q^3)}{d^3},$$

where d denotes a relative diameter of the expanded nano-silicon particles, as calculated according to Formula 1-1 and q denotes a relative diameter of the expanded nano-silicon particles at a center of the hollow portion, as calculated according to Formula 1-2.

[Formula 1-1]

$$d = r'/R,$$

where R denotes a radius of the hollow portion and r' denotes a radius of the expanded nano-silicon particles, r' = 1.5874*r (r being a radius of the nano-silicon particles)).

[Formula 1-2]

$$q = 1-2*d,$$

where d is the same as defined above.

5. The anode material according to claim 3, wherein the anode material comprises first nano-silicon particles and second nano-silicon particles having a radius ri and a radius $r_2$, respectively, and the number ($n_1$) of the first nano-silicon particles packed in the hollow portion and the number ($n_2$) of the second nano-silicon particles packed therein satisfy Formula 2.

[Formula 2]

$$n_1 \left(\frac{r_1'}{R}\right)^3 + n_2 \left(\frac{r_2'}{R}\right)^3 \leq 1,$$

where $r_1'$ denotes a radius of first expanded nano-silicon particles, $r_2'$ denotes a radius of second expanded nano-silicon particles, and R is a radius of the hollow portion, $r_1'$ and $r_2'$ being 1.5874*ri and 1.5874*$r_2$, respectively.

6. The anode material according to claim 1, wherein the anode material has an average particle diameter of 5 μm to 30 μm and the nano-silicon particles have an average particle diameter of 50 nm to 500 nm.

7. The anode material according to claim 1, wherein the hollow portion has an average diameter of 3 to 10 μm, the nano-silicon particles have an average particle diameter of 100 nm to 500 nm, and the number of nano-silicon particles packed in the hollow portion ranges from 1,100 to 15,000.

8. The anode material according to claim 1, wherein:

the anode material has a particle density of 1 g/cm$^3$ to 3 g/cm$^3$;
the hollow core has a thickness of 5 nm to 300 nm and a density of less than 1.8 g/cm$^3$; and
the first coating layer has a thickness of 5 nm to 100 nm and a density of 1.8 g/cm$^3$ to 2.5 g/cm$^3$.

9. The anode material according to claim 1, wherein the hard coating layer has a pencil hardness of 4H or higher as measured in accordance with ISO 15184, and a density of greater than 1.8 g/cm$^3$, the medium coating layer has a pencil hardness of 2H to less than 4H and a density of greater than 1.5 g/cm$^3$ to 1.8 g/cm$^3$, and the soft coating layer has a pencil hardness of less than 2H and a density of 1.5 g/cm$^3$ or less.

10. The anode material according to claim 1, further comprising: a second coating layer formed on an outer circumferential surface of the first coating layer,
wherein the second coating layer has a different hardness than the first coating layer and comprises at least one of a hard coating layer, a medium coating layer and a soft coating layer.

11. The anode material according to claim 1, wherein the anode material comprises the first coating layer and the hollow core in a weight ratio of 1:0.5 to 1:5.

12. The anode material according to claim 1, wherein the anode material comprises the first coating layer, the second coating layer and the hollow core in a weight ratio of 1:0.1 to 5:0.5 to 5.

13. A method of preparing an anode material, comprising:

drying a nano-silicon slurry to prepare dried powder;
preparing a first intermediate material using the dried powder and a first coating material; and
preparing a second intermediate material using the first intermediate material and a second coating material,
wherein the second intermediate material comprises a hollow core having a hollow portion therein, nano-silicon particles packed in the hollow portion, and a first coating layer formed on an outer circumferential surface of the hollow core; and
wherein the first coating layer comprises a hard coating layer, a medium coating layer or a soft coating layer, the hard coating layer having a higher hardness than the medium coating layer, the medium coating layer having a higher hardness than the soft coating layer, the hollow core and the first coating layer having different hardnesses.

14. The method according to claim 13, further comprising:

forming a second coating layer on an outer circumferential surface of the first coating layer of the second intermediate material after preparation of the second intermediate material,
wherein the second coating layer has a different hardness than the first coating layer and comprises at least one of a hard coating layer, a medium coating layer and a soft coating layer.

15. A secondary battery comprising:

a cathode;
an anode; and
an electrolyte disposed between the cathode and the anode,
wherein the anode comprises the anode material according to claim 1.

**FIG. 1**

<u>100</u>

**FIG. 2**

<u>200</u>

FIG. 3

Europäisches
Patentamt

European
Patent Office

Office européen
des brevets

# EUROPEAN SEARCH REPORT

**Application Number**

EP 24 17 5950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/233294 A1 (MOON JONGSEOK [KR] ET AL) 1 August 2019 (2019-08-01) * abstract; claims 1-42; figure 1 * * paragraph [0075] - paragraph [0076] * * paragraph [0287] - paragraph [0295] * * paragraph [0302] - paragraph [0305] * ----- | 1,2,6, 13,15 | INV. H01M4/04 C01B32/20 C01B33/00 C09C1/46 H01M4/36 C01G53/00 |
| X | WO 2022/139429 A1 (POSCO [KR]; RES INST IND SCIENCE & TECH [KR]) 30 June 2022 (2022-06-30) * abstract; claims 1-27; figure 1 * & EP 4 266 411 A1 (POSCO HOLDINGS INC [KR]; RES INST IND SCIENCE & TECH [KR]) 25 October 2023 (2023-10-25) * abstract; claims 1-27; figure 1 * * paragraph [0107] - paragraph [0111] * ----- | 1,2,6,15 | H01M4/38 H01M4/587 H01M10/0525 ADD. H01M4/02 |
| X | CN 115 207 308 A (ZHUHAI COSMX BATTERY CO LTD) 18 October 2022 (2022-10-18) * abstract; claims 1-10; figure 1; example 1 * * paragraph [0134] - paragraph [0140] * * paragraph [0141] - paragraph [0145] * * paragraph [0169] - paragraph [0174] * ----- | 1,15 | |

**TECHNICAL FIELDS SEARCHED (IPC)**

H01M
C01B
C09C

The present search report has been drawn up for all claims

| Place of search | Date of completion of the search | Examiner |
|---|---|---|
| The Hague | 18 October 2024 | Ramos Alonso, A |

EPO FORM 1503 03.82 (P04C01)

## ANNEX TO THE EUROPEAN SEARCH REPORT
## ON EUROPEAN PATENT APPLICATION NO.

EP 24 17 5950

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | Publication date | Patent family member(s) | | Publication date |
|---|---|---|---|---|
| US 2019233294 A1 | 01-08-2019 | CN | 110085856 A | 02-08-2019 |
| | | EP | 3518328 A1 | 31-07-2019 |
| | | US | 2019233294 A1 | 01-08-2019 |
| WO 2022139429 A1 | 30-06-2022 | CN | 116897443 A | 17-10-2023 |
| | | EP | 4266411 A1 | 25-10-2023 |
| | | JP | 2023554662 A | 28-12-2023 |
| | | KR | 20220089687 A | 28-06-2022 |
| | | US | 2024055586 A1 | 15-02-2024 |
| | | WO | 2022139429 A1 | 30-06-2022 |
| CN 115207308 A | 18-10-2022 | NONE | | |

**EP 4 478 436 A1**

**Patent documents cited in the description**

- KR 1020230062573
- KR 1020230113832
- KR 1020230138050
- KR 1020230160195
- KR 102185490